# EUROPEAN PATENT APPLICATION

(11) **EP 4 834 994 A1**
(43) Date of publication of application: **04.11.2026**
(21) Application number: 24913044.4
(22) Date of filing: 26.12.2024
(51) Int. Cl.: C08L 27/12, C08F 214/26, C08F 216/14, C08K 3/013, C08K 5/14, C08K 5/17

(54) **FLUORINE-CONTAINING POLYMER COMPOSITION, METHOD FOR PRODUCING FLUORINE-CONTAINING POLYMER COMPOSITION, AND CROSSLINKED RUBBER ARTICLE**

(30) Priority: 28.12.2023 JP 2023222377
(71) Applicant: AGC Inc., Chiyoda-ku Tokyo 100-8405 (JP)
(72) Inventor: TAMURA, Tasuku, Tokyo 100-8405 (JP); YANAGIYA, Aoi, Tokyo 100-8405 (JP); KAWAI, Tsuyoshi, Tokyo 100-8405 (JP); TAGUCHI, Daisuke, Tokyo 100-8405 (JP); TOYODA, Mizuna, Tokyo 100-8405 (JP)
(74) Representative: Müller-Boré & Partner Patentanwälte PartG mbB
(86) International application number: PCT/JP2024/046249
(87) International publication number: WO 2025/143158

(57) **Abstract**

To provide a fluorinated polymer composition capable of forming a crosslinked rubber article excellent in the mold release property, a method for producing a fluorinated polymer composition, and a crosslinked rubber article. The fluorinated polymer composition of the present invention is a fluorinated polymer composition comprising a fluorinated polymer and a crosslinking agent, wherein the optimum vulcanization time Te obtained in accordance with the formula A (Te=t_{C}(5)+10×(t_{C}(35)-t_{C}(5))) is 2.3 minutes or more. In the formula A, t_{C}(5) is the vulcanization time at which the torque reaches 5%, and t_{C}(35) is the vulcanization time at which the torque reaches 35%, in a torque-vulcanization time curve determined in accordance with JIS K6296-1 using the fluorinated polymer composition at a test temperature of 150°C, where the minimum torque value is defined as 0% and the maximum torque value is defined as 100%.

## Description

### TECHNICAL FIELD

The present invention relates to a fluorinated polymer composition, a method for producing a fluorinated polymer composition, and a crosslinked rubber article.

### BACKGROUND ART

Crosslinked rubber articles, obtained by crosslinking a fluorinated polymer, which are excellent in heat resistance, chemical resistance, flame retardancy, weather resistance, etc., are used in various industrial fields.

Patent Document 1 recites a fluorinated elastic copolymer composition which comprises a fluorinated elastic copolymer and a crosslinking agent, the fluorinated elastic copolymer having an iodine atom, having units a which are units based on tetrafluoroethylene, units b which are units based on a monomer having one polymerizable unsaturated bond (excluding tetrafluoroethylene) and units c which are units based on a fluorinated monomer having two or more polymerizable unsaturated bonds, and having a metal content within a predetermined range (see Claim 6).

Patent Document 1 also recites a method for producing a fluorinate elastic copolymer, which comprises emulsion-polymerizing tetrafluoroethylene, a monomer having one polymerizable unsaturated bond (excluding tetrafluoroethylene) and a fluorinated monomer having two or more polymerizable unsaturated bonds, in the presence of a radical polymerization initiator and a predetermined iodine-containing compound, to obtain a latex containing a fluorinated elastic copolymer, and agglomerating the fluorinated copolymer in the latex with an acid containing no metal element (see Claim 8), and Patent Document 1 further discloses a method for producing a fluorinated elastic copolymer composition using the obtained fluorinated elastic copolymer and a crosslinking agent.

### PRIOR ART DOCUMENTS

### PATENT DOCUMENTS

Patent Document 1: Japanese Patent No. 7140118

### DISCLOSURE OF INVENTION

### TECHNICAL PROBLEM

In recent years, improvement in performance of crosslinked rubber articles has been required in various fields, specifically, a fluorinated polymer composition capable of forming a crosslinked rubber article excellent in releasability from a mold (hereinafter also referred to as "mold release property") has been required.

To achieve such requirements, the present inventors have evaluated a crosslinked rubber article formed by using the fluorinated polymer composition as described in Patent Document 1 and as a result fund that there is a room for improvement in the mold release property.

Under these circumstances, the present invention has been made to solve the above problems, and the object of the present invention is to provide a fluorinated polymer composition capable of forming a crosslinked rubber article excellent in the mold release property, a method for producing a fluorinated polymer composition, and a crosslinked rubber article.

### SOLUTION TO PROBLEM

The present inventors have conducted extensive studies on the above objects and as a result found that the mold release property of a crosslinked rubber article improves by using a fluorinated polymer composition comprising a fluorinated polymer and a crosslinking agent, wherein the optimum vulcanization time Te obtained in accordance with the formula A to be described below is 2.3 minutes or more, and accomplished the present invention.

That is, the present inventors have found that the above objects can be achieved by the following configurations.
[1] A fluorinated polymer composition comprising a fluorinated polymer and a crosslinking agent,
   wherein the optimum vulcanization time Te obtained in accordance with the formula A is 2.3 minutes or more: $Te = {t}_{C} \left(5\right) + 10 \times \left({t}_{C}\left(35\right)-{t}_{C}\left(5\right)\right)$ formula A
   in the formula A, t_{C}(5) is the vulcanization time at which the torque reaches 5%, and t_{C}(35) is the vulcanization time at which the torque reaches 35%, in a torque-vulcanization time curve determined in accordance with JIS K6296-1 using the fluorinated polymer composition at a test temperature of 150°C, where the minimum torque value is defined as 0% and the maximum torque value is defined as 100%.
[2] The fluorinated polymer composition according to [1], wherein the optimum vulcanization time Te is 60 minutes or less.
[3] The fluorinated polymer composition according to [1] or [2], wherein the fluorinated polymer has units based on tetrafluoroethylene and units based on a perfluoro(alkyl vinyl ether).
[4] The fluorinated polymer composition according to any one of [1] to [3], wherein the crosslinking agent is at least one member selected from the group consisting of an organic peroxide and a compound having two or more amino groups.
[5] The fluorinated polymer composition according to any one of [1] to [4], which further contains a crosslinking aid.
[6] The fluorinated polymer composition according to [5], wherein the crosslinking aid is at least one member selected from the group consisting of a compound represented by the following formula (7), triallyl cyanurate, triallyl isocyanurate, trimethallyl isocyanurate, 1,3,5-triacryloyl hexahydro-1,3,5-triazine, triallyl trimellitate, m-phenylenediamine bismaleimide, p-quinone dioxime, p,p'-dibenzoylquinone dioxime, dipropargyl terephthalate, diallyl phthalate, N,N',N",N"'-tetraallyl terephthalamide, and a vinyl group-containing siloxane oligomer:

   (CR4^{1R}4²⁼CR4³⁾2_{R}4⁴ formula (7)

   in the formula (7), R⁴¹, R⁴² and R⁴³ are each independently a hydrogen atom, a fluorine atom, a C₁₋₅ alkyl group or a C₁₋₅ fluoroalkyl group, R⁴⁴ is a C₁₋₁₈ bivalent fluorohydrocarbon group or a group having an etheric oxygen atom at a terminal end or between a carbon-carbon bond of the fluorohydrocarbon group, and the two R⁴¹, the two R⁴² and the two R⁴³ may be respectively the same or different from each other.
[7] The fluorinated polymer composition according to any one of [1] to [6], which further contains a filler.
[8] The fluorinated polymer composition according to [7], wherein the filler is at least one member selected from the group consisting of carbon black, barium sulfate, calcium metasilicate, calcium carbonate, titanium oxide, silicon dioxide, clay and talc.
[9] The fluorinated polymer composition according to any one of [1] to [8], wherein the storage elastic modulus G' of the fluorinated polymer at 100°C at a frequency of 50 cpm is 200 kPa or more.
[10] A method for producing a fluorinated polymer composition, which comprises
   step 1 of polymerizing monomers containing tetrafluoroethylene and a perfluoro(alkyl vinyl ether), in an aqueous dispersion that contains substantially no water-soluble emulsifier, that contains a first fluorinated polymer containing units based on tetrafluoroethylene and units based on a perfluoro(alkyl vinyl ether), and that contains an aqueous medium, to produce a second fluorinated polymer containing units based on the tetrafluoroethylene and units based on the perfluoro(alkyl vinyl ether); and
   step 2 of adding a crosslinking agent to the second fluorinated polymer to obtain a fluorinated polymer composition containing the second fluorinated polymer and the crosslinking agent,
   wherein in the first fluorinated polymer, the content of the units based on the perfluoro(alkyl vinyl ether) is 20 to 95 mol% to the total content of the units based on the tetrafluoroethylene and the units based on the perfluoro(alkyl vinyl ether),
   in the second fluorinated polymer, the content of the units based on the perfluoro(alkyl vinyl ether) is 20 to 95 mol% to the total content of the units based on the tetrafluoroethylene and the units based on the perfluoro(alkyl vinyl ether); and
   before the start of the polymerization of the monomers, the content of the first fluorinated polymer is 0.01 to 4.0 mass% to the total mass of the aqueous dispersion.
[11] A crosslinked rubber article, which is obtained by crosslinking the fluorinated polymer contained in the fluorinated polymer composition as defined in any one of [1] to [9].

### ADVANTAGEOUS EFFECTS OF INVENTION

According to the present invention, it is possible to provide a fluorinated polymer composition capable of forming a crosslinked rubber article excellent in the mold release property, a method for producing a fluorinated polymer composition, and a crosslinked rubber article.

### DESCRIPTION OF EMBODIMENTS

Meanings of terms used in this specification are as follows.

In this specification, " to " used to show a range of numerical values is used to include numerical values before and after it as the lower limit value and the upper limit value.

In numerical ranges described stepwise in this specification, the upper limit value or the lower limit value described in a certain numerical range may be replaced with an upper limit value or a lower limit value of another numerical range described stepwise. In numerical ranges described in this specification, the upper limit value or the lower limit value described in a certain numerical range may be replaced with values indicated in Examples.

In this specification, as each component, a single type of a substance corresponding to the component may be used alone, or two or more types may be used in combination. In a case where two or more types are used in combination for each component, the content of the component means the total content of the substances used in combination, unless otherwise specified.

In this specification, a combination of two or more preferred embodiments corresponds to a more preferred embodiment.

"Units" generically mean an atomic group derived from one molecule of a monomer, directly formed by polymerization of the monomer, and an atomic group obtained by chemical conversion of a part of the atomic group. "Units based on a monomer" may sometimes be referred to simply as "units".

The content (mass% or mol%) of each units to all units of a polymer is obtained by analyzing the polymer by solid-state nuclear magnetic resonance spectroscopy (NMR). Usually, the content of each units calculated from the amount of charge of each monomer substantially agrees with the actual content of each units.

### [Fluorinated polymer composition]

The fluorinated polymer composition of the present invention (hereinafter also referred to as "the present composition") is a fluorinated polymer composition comprising a fluorinated polymer and a crosslinking agent, wherein the optimum vulcanization time Te obtained in accordance with the formula A to be described later is 2.3 minutes or more.

A crosslinked rubber article obtained by using the present composition (hereinafter also referred to as "the present crosslinked rubber article") is excellent in the mold release property. It is estimated that by using the present composition wherein the optimum vulcanization time Te is 2.3 minutes or more, the time required for crosslinking tends to be long to a certain extent, whereby crosslinking sites tend to uniformly be distributed in the crosslinked rubber article, and as a result, the article will readily be released from the mold. On the other hand, it is considered that if the optimum vulcanization time Te is less than 2.3 minutes, non-crosslinked moiety tends to remain in the crosslinked rubber article, and the article will hardly be released from the mold.

The optimum vulcanization time Te of the present composition may be obtained in accordance with the following formula A. $Te = {t}_{C} \left(5\right) + 10 \times \left({t}_{C}\left(35\right)-{t}_{C}\left(5\right)\right)$ formula A

In the formula A, t_{C}(5) is the vulcanization time at which the torque reaches 5% in a torque-vulcanization time curve determined in accordance with JIS K6296-1 using the present composition at a test temperature of 150°C, where the minimum torque value is defined as 0% and the maximum torque value is defined as 100%.

Further, in the formula A, t_{C}(35) is the vulcanization time at which the torque reaches 35% in a torque-vulcanization time curve determined using the present composition at a test temperature of 150°C, where the minimum torque value is defined as 0% and the maximum torque value is defined as 100%.

The method for determining t_{C}(5) and t_{C}(35) will be described in further detail in EXAMPLES.

The optimum vulcanization time Te of the present composition is 2.3 minutes or more, and in view of more excellent effect of the present invention, preferably 3.0 minutes or more, more preferably 3.5 minutes or more, further preferably 4.0 minutes or more, particularly preferably 4.5 minutes or more. In view of low harness of the crosslinked rubber article, more excellent flexibility and thus improved mold release property, it is preferably 60 minutes or less, more preferably 30 minutes or less, further preferably 10 minutes or less, particularly preferably 5.5 minutes or less.

t_{C}(5) of the present composition is preferably 0.3 minutes or more, and in view of low hardness and excellent flexibility, more preferably 0.4 minutes or more, further preferably 0.5 minutes or more, particularly preferably 0.8 minutes or more. From the viewpoint of the balance between hardness and elongation at break, it is preferably 5 minutes or less, more preferably 2 minutes or less, further preferably 1 minute or less.

t_{C}(35) of the present composition is, in view of low hardness and excellent flexibility, preferably 0.5 minutes or more, more preferably 0.71 minutes or more, especially preferably 1 minute or more. From the viewpoint of the balance between hardness and elongation at break, it is preferably 5 minutes or less, more preferably 2 minutes or less, further preferably 1.5 minutes or less.

### [Fluorinated polymer]

The present composition comprises a fluorinated polymer. The fluorinated polymer may be produced by the method for producing a fluorinated polymer to be described below.

The fluorinated polymer contained in the present composition may be a polymer that contains fluorinate atoms and that exhibits rubber properties when crosslinked, preferably has units based on a monomer containing a fluorinate atom (hereinafter also referred to as "fluorinated monomer"), and is preferably a perfluorinated polymer.

The "perfluorinated polymer" refers to a polymer of which the main chain is a chain of carbon atoms, which has substantially no hydrogen atom bonded to the carbon atoms and has fluorine atoms instead of hydrogen atoms. The perfluorinated polymer may have a polyvalent atom other than the carbon atom at its side chains, and the polyvalent atom is preferably an oxygen atom.

"Has substantially no hydrogen atom" means a content of hydrogen atoms in the perfluorinated polymer of 0.5 mass% or less, preferably 0.1 mass% or less, more preferably 0.07 mass% or less, further preferably 0.05 mass% or less. The lower limit may be 0 mass%. When the content of hydrogen atoms is within the above range, favorable heat resistance or chemical resistance tends to be obtained.

The fluorinated polymer preferably has units based on tetrafluoroethylene (hereinafter also referred to as "TFE") and units based on a perfluoro(alkyl vinyl ether) (hereinafter also referred to as "PAVE"). Hereinafter, the units based on TFE will also be referred to simply as "TFE units", and the units based on PAVE will also be referred to simply as "PAVE units".

PAVE, from which the PAVE units are derived, is preferably a monomer represented by the formula (1), in view of excellent polymerizability when the first fluorinated polymer to be described below is produced, and with a view to more efficiently producing the fluorinated polymer.

CF₂=CF-O-R^{f1} (1)

In the formula (1), R^{f1} is a C₁₋₁₀ perfluoroalkyl group. The number of carbon atoms in R^{f1} is, in view of more excellent polymerizability, preferably 1 to 8, more preferably 1 to 6, further preferably 1 to 5, particularly preferably 1 to 3.

The perfluoroalkyl group may be linear or branched.

Specific examples of PAVE include perfluoro(methyl vinyl ether) (hereinafter also referred to as "PMVE"), perfluoro(ethyl vinyl ether) (hereinafter also referred to as "PEVE") and perfluoro(propyl vinyl ether) (hereinafter also referred to as "PPVE"). With a view to more efficiently producing the fluorinated polymer, PMVE and PPVE are preferred, and PMVE is more preferred.

The content of the TFE units in the fluorinated polymer, to the total content of the TFE units and the PAVE units, is preferably 5 to 90 mol%, more preferably 20 to 80 mol%, further preferably 30 to 80 mol%, particularly preferably 40 to 75 mol%. The content of the TFE units to the total content of the TFE units and the PAVE units is also more preferably 5 to 80 mol%.

The preferred amount used is the same when PMVE or PPVE is used as PAVE.

The total content of the TFE units and the PAVE units in the fluorinated polymer, to the total content of all units in the fluorinated polymer, is preferably 80 to 100 mol%, more preferably 90 to 100 mol%, further preferably 95 to 100 mol%.

The content of the TFE units in the fluorinated polymer, to the total content of all units in the fluorinated polymer, is preferably 5 to 90 mol%, more preferably 20 to 80 mol%, further preferably 30 to 80 mol%, particularly preferably 40 to 75 mol%. The content of the PAVE units in the fluorinated polymer, to the total content of all units in the fluorinated polymer, is preferably 10 to 95 mol%, more preferably 20 to 80 mol%, further preferably 20 to 70 mol%, particularly preferably 25 to 60 mol%. The preferred amount used is the same when PMVE or PPVE is used as PAVE.

The fluorinated polymer may contain units based on a monomer other than TFE and PAVE (hereinafter also referred to as "other monomer") (hereinafter the units will also be referred to as "other units") and preferably contains units based on the other monomer.

Specific examples of the other monomer include a monomer having two or more polymerizable unsaturated bonds (hereinafter also referred to as "BO"), a monomer having one or more of at least one type of atom selected from the group consisting of a chlorine atom, a bromine atom and an iodine atom (hereinafter also referred to as "R_{Hal}"), a monomer having a nitrile group (hereinafter also referred to as "R_{CN}"), and a compound represented by the formula (6) to be described below (hereinafter also referred to as "POAVE").

BO is a monomer having two or more polymerizable unsaturated bonds.

The polymerizable unsaturated bond may, for example, be a carbon atom-carbon atom double bond (C=C) and a carbon atom-carbon atom triple bond (C≡C).

The number of the polymerizable unsaturated bonds in BO is preferably 2 to 6, more preferably 2 or 3, further preferably 2, in view of more excellent polymerizability.

BO preferably has a fluorine atom, whereby the resulting crosslinked rubber article has a smaller compression set at high temperature.

BO is preferably a monomer represented by the formula (2), whereby the resulting crosslinked rubber article has more excellent mold release property.

(CR²¹R²²=CR²³-)ₐ₁R²⁴ (2)

In the formula (2), R²¹, R²² and R²³ are each independently a hydrogen atom, a fluorine atom, a methyl group or a trifluoromethyl group, a1 is an integer of 2 to 6, R²⁴ is a C₁₋₁₀ a1-valent perfluorohydrocarbon group, or a group having an etheric oxygen atom at a terminal end or in a carbon-carbon bond of a C₁₋₁₀ a1-valent perfluorohydrocarbon group. The plurality of R²¹, the plurality of R²² and the plurality of R²³ may be respectively the same or different from each other, and they are preferably the same.

a1 is preferably 2 or 3, particularly preferably 2.

R²¹, R²² and R²³ are preferably a fluorine atom or a hydrogen atom, whereby BO is more excellent in polymerizability, it is more preferred that all of R²¹, R²² and R²³ are fluorine atoms or all of them are hydrogen atoms, and it is particularly preferred that all of R²¹, R²² and R²³ are fluorine atoms, whereby the resulting crosslinked rubber article is more excellent in mold release property.

R²⁴ may be linear, branched or cyclic, preferably linear or branched, particularly preferably linear. The number of carbon atoms of R²⁴ is preferably 2 to 8, more preferably 3 to 7, further preferably 3 to 6, particularly preferably 3 to 5.

R²⁴ may or may not have an etheric oxygen atom, but it preferably has an etheric oxygen atom, whereby more excellent crosslinkability and rubber physical properties are achieved.

The number of the etheric oxygen atom in R²⁴ is preferably 1 to 6, more preferably 1 to 3, further preferably 1 or 2. The etheric oxygen atom in R²⁴ is present preferably at a terminal end of R²⁴.

Specific examples of a preferred monomer among the monomers represented by the formula (2) include a monomer represented by the formula (3) and a monomer represented by the formula (4).

(CF₂=CF-)₂R³¹ (3)

In the formula (3), R³¹ is a C₁₋₁₀ bivalent perfluorohydrocarbon group or a group having an etheric oxygen atom at a terminal end or in a carbon-carbon bond of a C₁₋₁₀ bivalent perfluorohydrocarbon group.

(CH₂=CH-)₂R⁴¹ (4)

In the formula (4), R⁴¹ is a C₁₋₁₀ bivalent perfluorohydrocarbon group, or a group having an etheric oxygen atom at a terminal end or in a carbon-carbon bond of a C₁₋₁₀ bivalent perfluorohydrocarbon group.

Specific examples of the monomer represented by the formula (3) include CF₂=CFO(CF₂)₂OCF=CF₂, CF₂=CFO(CF₂)₃OCF=CF₂, CF₂=CFO(CF₂)₄OCF=CF₂, CF₂=CFO(CF₂)₆OCF=CF₂, CF₂=CFO(CF₂)₈OCF=CF₂, CF₂=CFO(CF₂)₂OCF(CF₃)CF₂OCF=CF₂, CF₂=CFO(CF₂)₂O(CF(CF₃)CF₂O)₂CF=CF₂, CF₂=CFOCF₂O(CF₂CF₂O)₂CF=CF₂, CF₂=CFO(CF₂O)₃O(CF(CF₃)CF₂O)₂CF=CF₂, CF₂=CFOCF₂CF(CF₃)O(CF₂)₂OCF(CF₃)CF₂OCF=CF₂, and CF₂=CFOCF₂CF₂O(CF₂O)₂CF₂CF₂OCF=CF₂.

Specific examples of a more preferred monomer among the monomers represented by the formula (3), include CF₂=CFO(CF₂)₃OCF=CF₂ (hereinafter also referred to as "C3DVE"), and CF₂=CFO(CF₂)₄OCF=CF₂ (hereinafter also referred to as "C4DVE").

Specific examples of the monomer represented by the formula (4) include CH₂=CH(CF₂)₂CH=CH₂, CH₂=CH(CF₂)₄CH=CH₂ and CH₂=CH(CF₂)₆CH=CH₂.

Specific examples of a more preferred monomer among the monomers represented by the formula (4) include CH₂=CH(CF₂)₆CH=CH₂ (hereinafter also referred to as "C6DV").

Particularly, BO is preferably C3DVE or C4DVE.

R_{Hal} may be a monomer having a bromine atom or a monomer having an iodine atom.

Specific examples of the monomer having a bromine atom include CF₂=CFOCF₂CF₂CF₂OCF₂CF₂Br, bromotrifluoroethylene, 4-bromo-3,3,4,4-tetrafluorobutene-1 (BTFB), vinyl bromide, 1-bromo-2,2-difluoroethylene, perfluoroallyl bromide, 4-bromo-1,1,2-trifluorobutene-1, 4-bromo-1,1,3,3,4,4-hexafluorobutene, 4-bromo-3-chloro-1,1,3,4,4-pentafluorobutene, 6-bromo-5,5,6,6-tetrafluorohexene, 4-bromoperfluorobutene-1, and 3,3-difluoroallyl bromide. Further, fluorinated compounds such as 2-bromo-perfluoroethyl perfluorovinyl ether and CF₂Br-R_{f}-O-CF=CF₂ (wherein R_{f} is a perfluoroalkylene group), for example, fluorovinyl ethers such as CF₂BrCF₂O-CF=CF₂, ROCF=CFBr, and ROCBr=CF₂ (wherein R is a lower alkyl group or a fluoroalkyl group), specifically, CH₃OCF=CFBr and CF₃CH₂OCF=CFBr may be mentioned.

Specific examples of the monomer having an iodine atom include iodized olefins represented by the formula: CHR=CH-Z-CH₂CHR-I (wherein R is -H or -CH_{3,} and R may be the same or different; Z is a linear or branched C₁₋₁₈ (per)fluoroalkylene group which may contain one or more etheric oxygen atoms in some cases, or a (per)fluoropolyoxyalkylene group disclosed in US Patent No. 5674959). Unsaturated ethers of the formulae: I(CH₂CF₂CF₂)ₙOCF=CF₂ and ICH₂CF₂O[CF(CF₃)CF₂O]ₙCF=CF₂ (in the formulae, n=1 to 3) disclosed in US Patent No. 5717036 may also be mentioned. Further, iodoethylene, 4-iodo-3,3,4,4-tetrafluorobutene-1 (ITFB), 3-chloro-4-iodo-3,4,4-trifluorobutene, 2-iodo-1,1,2,2-tetrafluoro-1-(vinyloxy)ethane, 2-iodo-1-(perfluorovinyloxy)-1,1,-2,2-tetrafluoroethylene, 1,1,2,3,3,3-hexafluoro-2-iodo-1-(perfluorovinyloxy)propane, 2-iodoethylvinyl ether, 3,3,4,5,5,5-hexafluoro-4-iodopentene and iodotrifluoroethylene, disclosed in US Patent No. 4694045 may be mentioned. Further, allyl iodide and 2-iodo-perfluoroethyl perfluorovinyl ether may be mentioned.

R_{CN} preferably has a polymerizable unsaturated bond, more preferably has one polymerizable unsaturated bond in view of polymerizability. Specific examples of the polymerizable unsaturated bond include a carbon atom-carbon atom double bond (C=C) and a carbon atom-carbon atom triple bond (C≡C).

R_{CN} is preferably a monomer represented by the following formula (5) in view of more excellent mold release property and heat resistance of a crosslinked rubber article.

CR⁵¹R⁵²=CR⁵³-R⁵⁴-CN (5)

In the formula (5), R⁵¹, R⁵² and R⁵³ are each independently a hydrogen atom, a fluorine atom or a methyl group, and R⁵⁴ is a C₁₋₁₀ bivalent perfluorohydrocarbon group or a group having an etheric oxygen atom at a terminal end or in a carbon-carbon bond of a C₁₋₁₀ bivalent perfluorohydrocarbon group.

In view of excellent polymerizability of R_{CN}, it is preferred that R⁵¹, R⁵² and R⁵³ are a fluorine atom or a hydrogen atom, it is more preferred that all of R⁵¹, R⁵² and R⁵³ are fluorine atoms or all of them are hydrogen atoms, and it is particularly preferred that all of R⁵¹, R⁵² and R⁵³ are fluorine atoms, whereby the resulting crosslinked rubber article is more excellent in mold release property and heat resistance.

R⁵⁴ may be linear, branched or cyclic, and is preferably linear or branched. The number of carbon atoms of R⁵⁴ is preferably 2 to 8, more preferably 3 to 7, further preferably 3 to 6, particularly preferably 3 to 5.

R⁵⁴ may or may not contain an etheric oxygen atom, and in view of more excellent rubber physical properties, preferably contains an etheric oxygen atom.

The number of etheric oxygen atom in R⁵⁴ is preferably 1 to 3, particularly preferably 1 or 2.

Specific examples of the monomer represented by the formula (5) include CF₂=CFOCF₂CF(CF₃)OCF₂CF₂CN (hereinafter also referred to as "8CNVE"), CF₂=CFO(CF₂)₅CN (hereinafter also referred to as "MV5CN"), CF₂=CFOCF₂CF₂CF₂OCF(CF₃)CN and CF₂=CFO(CF₂)₃CN, and in view of more excellent mold release property and heat resistance of a crosslinked rubber article, preferred are 8CNVE and MV5CN.

POAVE is a compound represented by the compound (6).

CF₂=CF(OCF₂CF₂)ₙ-(OCF₂)ₘ-OR^{f2} (6)

In the formula (6), R^{f2} is a C₁₋₄ perfluoroalkyl group, n is an integer of 0 to 3, m is an integer of 0 to 4, and n+m is an integer of 1 to 7.

The perfluoroalkyl group as R^{f2} may be linear or branched. The number of carbon atoms of R^{f2} is preferably 1 to 3.

When n is 0, m is preferably 1 or 2. When n is 1, m is preferably an integer of 2 to 4. When n is 2 or 3, m is preferably 0. n is preferably an integer of 1 to 3.

When the number of carbon atoms of R^{f2}, n and m are within the above ranges, the resulting crosslinked rubber article is excellent in low temperature properties and the productivity of the crosslinked rubber article will improve.

Specific examples of POAVE are as follows. The description in the parentheses after each formula is an abbreviated name for the compound.

CF₂=CF-OCF₂CF₂-(OCF₂)₄-OCF₃ (C9PEVE),

CF₂=CF-OCF₂CF₂-(OCF₂)₂-OCF₃ (C7PEVE),

CF₂=CF-(OCF₂CF₂)₂-OCF₂CF₃ (EEAVE),

CF₂=CF-(OCF₂CF₂)₃-OCF₂CF₃ (EEEAVE),

CF₂=CF-OCF₂-OCF₃, CF₂=CF-OCF₂-OCF₂-OCF₃

POAVE is preferably C9PEVE, C7PEVE, EEAVE or EEEAVE in view of more excellent low temperature property and productivity of the resulting crosslinked rubber article.

Such compounds may be produced by the method described in WO00/056694 from the corresponding alcohols as raw materials.

The content of the other units in the fluorinated polymer, to the total content of all units in the fluorinated polymer, is preferably 0.01 to 20 mol%, more preferably 0.01 to 10 mol%, further preferably 0.01 to 5 mol%.

In view of more excellent crosslinkability, the fluorinated polymer preferably contains at least one member selected from the group consisting of a polymerizable unsaturated bond, a chlorine atom, a bromine atom, an iodine atom and a nitrile group, more preferably contains at least one member selected from the group consisting of a chlorine atom, a bromine atom, an iodine atom and a nitrile group. In particular, the fluorinated polymer preferably contains the above atom or group on at least one of the terminal ends and side chains.

In production of the fluorinated polymer, by using the above other monomer in addition to TFE and PAVE, at least one of a polymerizable unsaturated bond, a chlorine atom, a bromine atom, an iodine atom and a nitrile group can be introduced to the terminal end or the side chain of the fluorinated polymer. Further, by polymerizing the monomers using a chain transfer agent containing an iodine atom, the iodine atom may be introduced to the terminal end of the fluorinated polymer.

In a case where the fluorinated polymer contains an iodine atom, the content of the iodine atom to the total mass of the fluorinated polymer is preferably 0.01 to 5.00 mass%, more preferably 0.01 to 2.00 mass%, further preferably 0.01 to 1.00 mass%.

The content of the fluorinated polymer to the total mass of the present composition is preferably 50 to 99 mass%, more preferably 70 to 99 mass%, particularly preferably 80 to 99 mass%.

The storage elastic modulus G' of the fluorinated polymer at 100°C at a frequency of 50 cpm is, with a view to satisfying both flexibility of the crosslinked rubber and scorch retardance, preferably 200 kPa or more, more preferably 240 kPa or more, and in view of moldability of the crosslinked rubber article, preferably 650 kPa or less, more preferably 500 kPa or less, further preferably 400 kPa or less.

The storage elastic modulus G' is a value measured in accordance with ASTM D6204, and the measurement conditions will be described in detail in EXAMPLES.

An example of a method of adjusting the storage elastic modulus may be a method of adjusting the amounts of the monomers used and the order of use of the monomers, etc.

The fluorinated polymer preferably satisfies at least one of the following requirements 1 and 2, more preferably satisfies both requirements 1 and 2.

Requirement 1: the 2% weight loss temperature of the fluorinated polymer is 300°C or higher and less than 420°C.

Requirement 2: the difference ΔTd between the 5% weight loss temperature of the fluorinated polymer and the 2% weight loss temperature of the fluorinated polymer is 20°C or more.

It is estimated that requirement 1 being satisfied means that the fluorinated polymer contains a low molecular weight component to a certain extent, thus improving crosslinkability of the fluorinated polymer and thus leading to decrease of t_{C}(5), whereby the fluorinated polymer composition which satisfies the optimum vulcanization time Te will readily be obtained.

Further, requirement 2 being satisfied means that the fluorinated polymer contains a high molecular weight component, thus improving dispersibility of the crosslinking agent and the crosslinking aid at the time of kneading and thus improving the reactivity, and thus leading to decrease of t_{C}(35), whereby the fluorinated polymer composition which satisfies the optimum vulcanization time Te will readily be obtained.

The fluorinated polymer which satisfies requirements 1 and 2 will readily be obtained by the method for producing a fluorinated polymer to be described below.

In this specification, the "2% weight loss temperature" and the "5% weight loss temperature" are measured by thermogravimetric analysis of the fluorinated polymer to be measured. Specifically, while a sample of the fluorinated polymer, without heat history to a temperature of 100°C or higher, is heated in an air atmosphere from 30°C to 550°C at a heating rate of 10°C/min, the weigh change of the sample is measured to conduct the thermogravimetric analysis. As a result of the thermogravimetric analysis, the temperature at which the mass of the sample becomes 98 mass% of the mass of the sample before heating, corresponds to the 2% mass loss temperature, and the temperature at which the mass of the sample becomes 95 mass% of the mass of the sample before heating, corresponds to the 5% mass loss temperature. ΔTd of requirement 2 is calculated from the 5% weight loss temperature and the 2% weight loss temperature.

As the apparatus used for the thermogravimetric analysis, for example, a differential thermogravimetric measuring apparatus "NEXTA STA series STA200" (manufactured by Hitachi High-Tech Corporation) may be mentioned.

The method of the thermogravimetric analysis to measure the weight loss temperatures and to prepare a thermogravimetric curve to be described below, will be described specifically in EXAMPLES.

The 2% weight loss temperature of the fluorinated polymer is preferably 300°C or higher and less than 420°C, more preferably 350 to 415°C, further preferably 370 to 410°C.

The 5% weight loss temperature of the fluorinated polymer is preferably 320 to 500°C, more preferably 380 to 480°C, further preferably 420 to 460°C.

ΔTd of the fluorinated polymer is preferably 20°C or more, more preferably 20 to 100°C, further preferably 25 to 70°C.

### <Method for producing fluorinated polymer>

As a method for producing the fluorinated polymer, for example, a method of copolymerizing monomers including TFE and PAVE, and optionally used other monomers in the presence of a polymerization initiator may be mentioned.

The polymerization method may, for example, be emulsion polymerization, solution polymerization or suspension polymerization, and in view of excellent adjustment of the molecular weight and the copolymer composition, and the productivity, preferably emulsion polymerization.

In a case where production of the fluorinated polymer is performed by emulsion polymerization, for example, emulsion polymerization may be conduced by heating the monomers in the presence of an aqueous medium and a polymerization initiator and an optionally used emulsifier.

As a preferred embodiment of the method for producing the fluorinated polymer, the following method for producing a fluorinated polymer may be mentioned. That is, in an aqueous dispersion that contains substantially no water-soluble emulsifier, that contains a first fluorinated polymer having TFE units and PAVE units, and that contains an aqueous medium (hereinafter also referred to as "first aqueous dispersion"), monomers containing TFE and PAVE (hereinafter also referred to as "specific monomers") are polymerized to produce a polymer (hereinafter also referred to as "second fluorinated polymer"), and an aqueous dispersion containing the fluorinated polymer obtained (hereinafter also referred to as "second aqueous dispersion") is subjected to a stirring treatment to agglomerate the fluorinated polymer, and the agglomerated fluorinated polymer is recovered.

In the present production method, the step of polymerizing the specific monomers in the first aqueous dispersion to obtain the second aqueous dispersion containing the fluorinated polymer will also be referred to as "second aqueous dispersion production step", and the step of subjecting the second aqueous dispersion to a stirring treatment to agglomerate the fluorinated polymer and recovering the agglomerated fluorinated polymer will also be referred to as "recovery step".

By using the fluorinated polymer used in the present production method, the fluorinated polymer composition which satisfies the above optimum vulcanization time Te will readily be obtained.

Now, the respective steps will be described in detail.

### (Second aqueous dispersion production step)

In second aqueous dispersion production step, the specific monomers containing TFE and PAVE are polymerized in the first aqueous dispersion that contains substantially no water-soluble emulsifier and that contains the first fluorinated polymer and an aqueous medium.

The first aqueous dispersion, which uses no water-soluble emulsifier, contains substantially no water-soluble emulsifier.

"Contains substantially no water-soluble emulsifier" means a content of the water-soluble emulsifier in the first aqueous dispersion to the total mass of the first aqueous dispersion of 10 mass ppm or less, preferably 100 mass ppb or less, more preferably 50 mass ppb or less. The content is also preferably the quantitative determination limit or less in the measurement method described in EXAMPLES. The lower limit may be 1 mass ppb.

The content of the water-soluble emulsifier may be measured by liquid chromatography mass spectrometer. Specifically, the measurement method described in WO2018/181904, paragraphs [0721] to [0732] may be mentioned.

The water-soluble emulsifier refers to an emulsifier having a solubility in 1000 g of water at 25°C of 100 mg or more.

The water-soluble emulsifier may be an emulsifier having a fluorine atom or an emulsifier having no fluorine atom, which is water-soluble. Neither of the first fluorinated polymer nor the second fluorinated polymer to be described below corresponds to an emulsifier.

The water-soluble emulsifier may be either ionic or non-ionic.

The emulsifier having a fluorine atom may be an anionic fluorinated emulsifier.

The anionic fluorinated emulsifier may be an emulsifier of which the moiety excluding the anionic group has a total number of carbon atoms of 20 or less and which has a fluorine atom, or an emulsifier of which the anionic moiety has a molecular weight of 800 or less and which has a fluorine atom.

The emulsifier having no fluorine atom has no fluorine atom and has a hydrocarbon group such as an alkyl group. The hydrogen atom in the hydrocarbon group of the emulsifier having no fluorine atom, may be replaced with a halogen atom other than a fluorine atom.

The emulsifier having no fluorine atom may be a hydrocarbon emulsifier and specifically may be an ionic hydrocarbon emulsifier or a non-ionic hydrocarbon emulsifier.

The ionic hydrocarbon emulsifier may be an anionic hydrocarbon emulsifier.

The anionic hydrocarbon emulsifier is a hydrocarbon emulsifier having a negatively charged hydrophilic moiety such as a carboxylate group, a sulfonate group, a sulfate group, a phosphonate group or a phosphate group, and having a hydrocarbon moiety such as an alkyl group as the hydrophobic moiety.

Examples of the anionic hydrocarbon emulsifier include a highly branched C10 tertiary carboxylic acid available as Versatic (registered trademark) 10 from Resolution Performance Products, sodium linear alkyl polyether sulfonate available as Avanel (registered trademark) S series from BASF, sodium dodecyl sulfate, and sulfosuccinate emulsifier Lankropol (registered trademark) K8300 available from AkzoNobel Surface Chemistry LLC.

The non-ionic hydrocarbon emulsifier is am emulsifier which does not dissociate into ions in water and show surface activity, and has a hydrocarbon group such as an alkyl group as the hydrophobic moiety.

The hydrophilic moiety of the non-ionic hydrocarbon emulsifier may be a water-soluble functional group such as a polyethylene oxide chain, obtained by polymerization of ethylene oxide. The non-ionic hydrocarbon emulsifier may be a polyalkylene oxide block copolymer, for example, a block copolymer having polyethylene oxide and polypropylene oxide.

As the non-ionic hydrocarbon emulsifier, emulsifiers as described in JP-A-2016-537499 at paragraphs [0043] to [0052] may be mentioned.

The emulsifier having a fluorine atom and the emulsifier having no fluorine atom may contain a silicon atom. The emulsifier containing a silicon atom may be a siloxane emulsifier.

The siloxane emulsifier may be emulsifiers as described in US Patent No. 6,841,616 (Wille et al) and US Patent No. 7,977,438 (Brothers et al).

The emulsifier having a fluorine atom and the emulsifier having no fluorine atom may be a polymer emulsifier. The polymer emulsifier may be a water-soluble polymer having a hydrophilic group at its side chain. Such a polymer emulsifier may, for example, be a polymer having units based on a compound having a polymerizable moiety and a hydrophilic group. Further, a polymer which had no hydrophilic group at the time of polymerization but had units based on a compound having a group convertible to a hydrophilic group, having been subjected to post-treatment such as hydrolysis, may also be mentioned.

The first aqueous dispersion preferably contains substantially none of emulsifiers represented by the formulae (S1) to (S4). When no emulsifier is used at the time of production of the first fluorinated polymer contained in the first aqueous dispersion, generation of the compounds represented by the formulae (S1) to (S4) can be suppressed, and the contents of these compounds can readily be adjusted.

H-(CF₂)ₙ₁-COOM (S1)

F-(CF₂)ₙ₁-COOM (S2)

H-(CF₂)ₙ₂-SO₃M (S3)

F-(CF₂)ₙ₂-SO₃M (S4)

In the formulae (S1) to (S4),
n1 is an integer of 3 to 19,
n2 is an integer of 4 to 20, and
M is each independently a hydrogen atom, Na, K or NH₄.

The first fluorinated polymer is a fluorinated polymer containing the TFE unis and the PAVE units.

It is estimated to be as follows. That is, the first fluorinated polymer, at the time of polymerization of the specific monomers to be described below, adsorbs and includes the specific monomers at its hydrophobic moiety to solubilize the specific monomers even when the first aqueous dispersion contains no emulsifier, and facilitate the polymerization of the specific monomers. Further, the first fluorinated polymer contributes to dispersion stabilization in the first aqueous dispersion.

The details of PAVE are the same as those of PAVE from which the PAVE units of the fluorinated polymer are derived, and the preferred embodiment is also the same.

In the first fluorinated polymer, the content of the TFE units to the total content of the TFE units and the PAVE units, is preferably 20 to 95 mol%, more preferably 40 to 85 mol%, and with a view to more efficiently producing the fluorinated polymer, it is further preferably 50 to 75 mol%, particularly preferably 60 to 70 mol%.

In the first fluorinated polymer, the content of the PAVE units to the total content of the TFE units and the PAVE units, is preferably 5 to 80 mol%, more preferably 15 to 60 mol%, and with a view to more efficiently producing the fluorinated polymer, further preferably 25 to 55 mol%, particularly preferably 30 to 40 mol%. The preferred amount used is the same when PMVE or PPVE is used as PAVE.

In the first fluorinated polymer, the total content of the TFE units and the PAVE units to the total content of all units of the first fluorinated polymer, is preferably 99.0 to 100.0 mol%, more preferably 99.5 to 100.0 mol%, further preferably 99.9 to 100.0 mol%.

The first fluorinated polymer may contain units based on a monomer other than TFE and PAVE, and with a view to more efficiently producing the fluorinated polymer, it also preferably contains substantially no units based on other monomer.

"Contains substantially no units based on other monomer" means a content of the units based on the other monomer, to the total content of all units of the first fluorinated polymer, of 0.01 mol% or less, preferably 0 mol%.

With a view to more efficiently producing the fluorinated polymer, before the start of the polymerization of the specific monomers, the content of the first fluorinated polymer to the total mass of the first aqueous dispersion is preferably 0.01 to 4.0 mass%, more preferably 0.01 to 0.6 mass%, further preferably 0.01 to 0.5 mass%.

In this specification, "before the start of the polymerization of the specific monomers" means immediately before the polymerization start point. The "polymerization start point" means a point when the monomers (the monomers and a polymerization initiator if used) are allowed to coexist in a reactor after the interior of the reactor is heated to the polymerization temperature or higher, a point when the interior of the reactor is heated to the polymerization temperature or higher after the monomers (the monomers and a polymerization initiator if used) are allowed to coexist in the reactor, or the like.

Before the start of the polymerization of the specific monomers, the first aqueous dispersion contains no specific monomers and polymerization initiator.

The content (solid content) of the first fluorinated polymer in the first aqueous dispersion may be measured, for example, as follows.

2.0 g of the first aqueous dispersion is heated at 170°C for 20 minutes, the mass of the residue is weighed, and the solid content is calculated in accordance with the following formula.

"Solid content concentration (mass%)=100 × mass (g) of the residue after heating first aqueous dispersion/mass (2.0 g) of first aqueous dispersion"

The preferred embodiment of second aqueous dispersion production step may be an embodiment in which the content of the PAVE units to the total content of the TFE units and the PAVE units in the first fluorinated polymer is 20 to 95 mol%, and before the start of polymerization of the specific monomers, the content of the first fluorinated polymer to the total mass of the first aqueous dispersion is 0.01 to 4.0 mass%.

The method for producing the first fluorinated polymer is preferably a method of polymerizing monomers containing TFE and PAVE in an aqueous medium in the presence of a polymerization initiator. By this method, the first fluorinated polymer dispersed in the form of particles in the aqueous medium is obtained.

The aqueous medium having particles of the first fluorinated polymer dispersed thus obtained may be used as it is as the first aqueous dispersion. Otherwise, by solvent replacement, the particles of the first fluorinated polymer may be dispersed in other aqueous medium, and this dispersion may be used as the first aqueous dispersion.

The polymerization initiator used for the production of the first fluorinated polymer is preferably a water-soluble polymerization initiator. A persulfate such as ammonium persulfate, sodium persulfate or potassium persulfate, or an organic polymerization initiator such as disuccinic peroxide or azobisisobutylamidine dihydrochloride, is more preferred, a persulfate is further preferred, and ammonium persulfate is particularly preferred.

The aqueous medium used for production of the first fluorinated polymer may, for example, be water or a solvent mixture of water and a water-soluble organic solvent. Specific examples of the water-soluble organic solvent include tert-butanol, propylene glycol, dipropylene glycol, dipropylene glycol monomethyl ether and tripropylene glycol.

It is preferred that in production of the first fluorinated polymer, the aqueous medium containing the monomers preferably contains no emulsifier. The emulsifier (e.g. the type of the emulsifier) is as described above.

The first aqueous dispersion containing the fist fluorinated polymer is used for the polymerization of the specific monomers, preferably after conducting a purification treatment to reduce or deactivate the polymerization initiator and decomposed products thereof. In the purification treatment, by removing the polymerization initiator and decomposed products thereof which may be contained in the first aqueous dispersion containing the first fluorinated polymer, the fluorinated polymer having desired physical property values is likely to be obtained.

The purification treatment method may be heat treatment or removal using an ion exchange resin (preferably an anion exchange resin).

The purification treatment may be conducted several times.

The aqueous medium contained in the first aqueous dispersion may, for example, be the aqueous medium used for the production of the first fluorinated polymer. As described above, the aqueous medium used as the polymerization solvent in production of the first fluorinated polymer may also be used.

Before the start of the polymerization of the specific monomers, the content of the aqueous medium to the total mass of the first aqueous dispersion is preferably 60 to 99.9 mass%, more preferably 96 to 99.9 mass%, further preferably 98 to 99.9 mass%.

The first aqueous dispersion may contain other component other than the first fluorinated polymer and the aqueous medium.

Specific examples of the other component include a reducing agent, a pH adjusting agent and a chain transfer agent to be described below.

Specific examples of the pH adjusting agent include an inorganic salt and ammonia. Specific examples of the inorganic salt include phosphates such as disodium hydrogenphosphate and sodium dihydrogen phosphate, and carbonates such as sodium hydrogen carbonate and sodium carbonate. More preferred specific examples of the phosphate include disodium hydrogenphosphate dihydrate and disodium hydrogenphosphate dodecahydrate.

In a case where the first aqueous dispersion contains the pH adjusting agent, the content of the pH adjusting agent is preferably 0.01 to 3.0 parts by mass per 100 parts by mass of the aqueous medium.

### ·Specific monomers

The specific monomers are monomers containing TFE and PAVE. The preferred embodiments of TFE and PAVE as the specific monomers are the same as the preferred embodiments of TFE and PAVE in the above-described first fluorinated polymer.

The total amount of TFE and PAVE used, to the amount of the specific monomers used, is preferably 80 to 100 mol%, more preferably 90 to 100 mol%, further preferably 95 to 100 mol%.

The specific monomers may contain a monomer other than TFE and PAVE (hereinafter also referred to as "other monomer").

Specific examples of the other monomer include the above-described BO, R_{Hal}, R_{CN} and POAVE.

Preferred embodiments of such other monomers are the same as the preferred embodiments of the other monomer in the description of the units based on the other monomer which may be contained in the fluorinated polymer.

The amount of the other monomer used, to the amount of the specific monomers used, is preferably 0 to 20 mol%, more preferably 0 to 10 mol%, further preferably 0 to 5 mol%.

The specific monomers preferably consist solely of TFE and PAVE, or preferably contain TFE and PAVE and further contain at least one monomer selected from the group consisting of BO, R_{Hal} and R_{CN}.

In second aqueous dispersion production step, the specific monomers are polymerized preferably in the presence of a polymerization initiator.

The polymerization initiator is preferably an oil-soluble radical initiator, a water-soluble radical initiator or a water-soluble redox catalyst.

Specific examples of the oil-soluble radical initiator include oil-soluble organic peroxides such as tert-butyl peroxypivalate (hereinafter also referred to as "PBPV") and diisopropyl peroxydicarbonate (hereinafter also referred to as "IPP").

Specific examples of the water-soluble radical initiator include water-soluble organic peroxides such as persulfates including ammonium persulfate, potassium persulfate, etc., and water-soluble organic peroxides such as disuccinic peroxide, bisglutaric peroxide and tert-butyl hydroperoxide (hereinafter also referred to as "TBHP").

The water-soluble redox catalyst is preferably a combination of an oxidizing agent such as bromic acid or its salt, chloric acid or its salt, persulfuric acid or its salt, permanganic acid or its salt, or hydrogen peroxide, and a reducing agent such as sulfurous acid or its salt, hydrogensulfite or its salt, thiosulfuric acid or its salt, an organic acid or an inorganic salt. The persulfate is preferably potassium persulfate or ammonium persulfate. The sulfite is preferably sodium sulfite. The inorganic salt is preferably a combination of sulfate anion, sulfite anion or chloride anion and metal ion. The metal ion is preferably a transition metal ion, such as a manganese, iron, cobalt, nickel, copper, zinc, cerium or silver ion, and is preferably an iron ion. The inorganic salt is preferably iron(II) sulfate.

The polymerization initiator is preferably the oil-soluble radical initiator or the water-soluble radical initiator, and with a view to more efficiently producing the fluorinated polymer, more preferably the water-soluble radical initiator, further preferably a water-soluble organic peroxide.

The polymerization initiator may be used in combination of two or more types.

The amount of the initiator used is, per 100 parts by mass of the specific monomers used, preferably 0.01 to 5 parts by mass, more preferably 0.01 to 3 parts by mass, further preferably 0.01 to 2 parts by mass.

### ·Chain transfer agent

In second aqueous dispersion production step, the specific monomers are also preferably polymerized in the presence of a chain transfer agent.

Specific examples of the chain transfer agent include a chain transfer agent having an iodine atom, ethyl acetate, methanol, ethanol, t-butyl methyl ether, diethyl ether, n-pentane, cyclohexane, methane and propane, and a chain transfer agent having an iodine atom is preferred. By polymerizing the specific monomer using the chain transfer agent having an iodine atom, a fluorinated polymer having an iodine atom at its terminal end can be produced.

The chain transfer agent having an iodine atom is preferably a compound represented by the formula (I).

(R^{f})-(X)₂ (I)

In the formula (I),
R^{f} is a C₁₋₁₆ fluoroalkylene group, or an aromatic group,
X is an iodine atom or a bromine atom, provided that at least one of the two is an iodine atom,
The fluoroalkylene group as R^{f} may be linear or branched. R^{f} is preferably a perfluoroalkylene group.

It is preferred that both X are iodine atoms.

Specific examples of the compound represented by the formula (I) include 1,2-diiodoperfluoroethane, 1,3-diiodoperfluoropropane, 1,4-diiodoperfluorobutane (hereinafter also referred to as "C4DI"), 1,5-diiodoperfluoropentane, 1,6-diiodoperfluorohexane, 1,8-diiodoperfluorooctane, 1,3-diiodo-2-chloroperfluoropropane, 1,5-diiodo-2,4-dichloroperfluoropentane, 1,12-diiodoperfluorododecane, 1,16-diiodoperfluorohexadecane, diiodomethane, 1,2-diiodoethane, 1,3-diiodo-n-propane, (2-iodoethyl) substitute of benzene, 1-iodo-4-bromoperfluorobutane, 1-iodo-6-bromoperfluorohexane, 1-iodo-8-bromoperfluorooctane, 1-bromo-2-iodoperfluoroethane, 1-bromo-3-iodoperfluoropropane, 2-bromo-3-iodoperfluorobutane, 3-bromo-4-iodoperfluorobutene-1, 2-bromo-4-iodoperfluorobutene-1, and monoiodomonobromo substitute and diiodomonobromo substitute of benzene.

The compound represented by the formula (I) is preferably C4DI.

The amount of the chain transfer agent used, per 100 parts by mass of the specific monomers used, is preferably 0.1 to 10 parts by mass, more preferably 0.5 to 5 parts by mass, further preferably 1 to 3 parts by mass.

In view of more excellent crosslinkability of the fluorinated polymer produced, in the method for producing the fluorinated polymer according the present invention, it is preferred that the specific monomers contains at least one monomer selected from the group consisting of the above BO, R_{Hal} and R_{CN}, or the first aqueous dispersion contains the chain transfer agent containing an iodine atom.

Second aqueous dispersion production step is a step of polymerizing the specific monomers in the first aqueous dispersion to obtain the aqueous dispersion containing the second fluorinated polymer.

The specific monomers are charged into a reaction system (that is a polymerization reactor) by a conventional method. For example, the specific monomers may be charged into the reaction system continuously or intermittently so as to keep a predetermined polymerization pressure. Otherwise, the specific monomers may be dissolved in the aqueous medium and the obtained solution is continuously or intermittently charged into the reaction system.

In a case where the polymerization initiator is used, the polymerization initiator may be added to the reaction system all at once or in divided portions. Further, in a case where other component (for example the chain transfer agent) is used, the other component may be added to the reaction system all at once or in divided portions.

The polymerization temperature is preferably 10 to 95°C, more preferably 15 to 90°C.

The polymerization pressure is preferably 0.5 to 4.0 MPaG, more preferably 0.6 to 3.5 MPaG.

The polymerization time is preferably 90 to 1000 minutes, more preferably 90 to 700 minutes in the case of batch treatment.

The polymerization of the specific monomer is conducted preferably in a reaction system in which substantially no emulsifier is present.

The emulsifier may be the above-described emulsifier.

"Substantially no emulsifier is present" means an environment in which the content of the emulsifier is 0.03 mass ppm or less to the total mass of the aqueous medium contained in the first aqueous dispersion, and the content is preferably 0.02 mass ppm or less, more preferably 0 mass ppm.

By second aqueous dispersion production step, the fluorinated polymer is formed, and the second aqueous dispersion that has particles of the second fluorinated polymer dispersed in the aqueous medium is obtained.

### ·Second aqueous dispersion

The second aqueous dispersion is an aqueous dispersion containing the second fluorinated polymer obtained by second aqueous dispersion production step. In other words, the second aqueous dispersion is an aqueous dispersion that has particles containing the fluorinated polymer (hereinafter also referred to as "specific particles") dispersed in the aqueous medium.

The specific particles may or may not contain the first fluorinated polymer. In other words, the specific particles are particles containing the second fluorinated polymer or particles containing the first fluorinated polymer and the second fluorinated polymer.

The second aqueous dispersion may contain the first fluorinated polymer dispersed in the form of particles.

The preferred embodiment of the fluorinated polymer contained in the second aqueous dispersion is as described above.

The content of the specific particles containing the fluorinated polymer to the total mass of the second aqueous dispersion is, in view of dispersion stability of the specific particles, preferably 1 to 50 mass%, more preferably 1 to 40 mass%, further preferably 1 to 30 mass%.

The average particle size of the specific particles is preferably 1 µm or less, and in view of dispersion stability of the specific particles, more preferably 500 nm or less, further preferably 400 nm or less.

The average particle size of the specific particles is, in view of the recovery efficiency in recovery step to be described below, preferably 50 nm or more, more preferably 70 nm or more, further preferably 100 nm or more.

The average particle size of the specific particles is a particle size calculated by analyzing the autocorrelation function, which is obtained by dynamic light scattering measurements, using the cumulant method under the assumption of a monodisperse particle distribution.

Specific examples and preferred embodiment of the aqueous medium contained in the second aqueous dispersion are the same as the specific examples and the preferred embodiment of the aqueous medium contained in the above first aqueous dispersion.

The content of the aqueous medium to the total mass of the second aqueous dispersion is, in view of dispersion stability of the specific particles, preferably 50 to 99 mass%, more preferably 60 to 99 mass%, further preferably 70 to 99 mass%.

The content of the emulsifier in the second aqueous dispersion, to the total mass of the second aqueous dispersion, is preferably 100 mass ppm or less, more preferably 75 mass ppm or less, further preferably 50 mass ppm or less, particularly preferably 1 mass ppm or less. The content is also preferably the quantitative determination limit or less of the method of measuring the content of the emulsifier. The lower limit may be 1 mass ppb.

The content of the emulsifier may be measured by the same method for the above first aqueous dispersion.

Specific examples of the emulsifier are as described above. The emulsifier in the second aqueous dispersion may or may not be water-soluble.

### ·Recovery step

Recovery step is a step of subjecting the second aqueous dispersion obtained in second aqueous dispersion production step to a stirring treatment to agglomerate the fluorinated polymer thereby to obtain an agglomerated fluorinated polymer.

### ·Stirring treatment

The stirring treatment may be a known stirring treatment to impart shear force to the second aqueous dispersion.

The stirring treatment may be a known stirring treatment to impart shear force to the second aqueous dispersion, and is preferably a stirring treatment using a stirring apparatus rotating a shaft of agitation provided with an agitating impeller.

The shape of the agitating impeller may, for example, be a paddle impeller, an inclined paddle impeller, a propeller impeller, a disc impeller, a three-bladed swept-back impeller, an anchor impeller, a turbine impeller or a disc turbine impeller, and in view of excellent stirring efficiency, a paddle impeller or a disc turbine impeller is preferred.

The number of the agitating impeller is preferably 1 to 10, more preferably 2 to 4.

Specific examples of the shape of a vessel used in the above stirring treatment include a cylindrical shape, a conical shape, an elliptic cylindrical shape, a rectangular cylindrical shape, and a pyramidal shape, and in view of mixing property and flowability, a cylindrical shape is preferred.

The stirring apparatus may have a baffle plate.

The stirring time is preferably 0.1 to 24 hours, more preferably 0.1 to 12 hours, further preferably 0.1 to 6 hours.

The circumferential speed during stirring is preferably 2 to 50 m/s, more preferably 3 to 30 m/s, further preferably 5 to 30 m/s. The circumferential speed may be constant during stirring or may change during stirring. The circumferential speed is also preferably higher than the circumferential speed in step 1. The circumferential speed during stirring represents the blade tip speed of the impeller.

The temperature of the aqueous dispersion during the stirring treatment is preferably 10 to 90°C, more preferably 10 to 80°C, further preferably 15 to 70°C.

By the stirring treatment, a solid containing the agglomerated fluorinated polymer is obtained.

In this specification, the solid refers to a solid that is not stably dispersed in the aqueous medium, and a dispersoid that is stably dispersed in the aqueous medium is not considered as a solid even if it is a solid insoluble in the aqueous medium. For example, among insoluble components (for example the specific particles) contained in the second aqueous dispersion after stirring, a dispersoid that is stably dispersed in the aqueous medium is not included in the solid, and a precipitate, a float, etc. that are not stably dispersed in the aqueous medium are included in the solid. The solid may, for example, be an agglomerate of the fluorinated polymer.

The dispersoid stably dispersed may, for example, be a dispersoid which passes Type 5A filter paper as specified in JIS P 3801 (Filter paper for chemical analysis).

The particle size of the solid may, for example, be 500 µm or more, and is preferably 1000 µm or more.

The agglomerate of the fluorinated polymer separated by the stirring treatment is recovered to obtain the fluorinated polymer containing the TFE units and the PAVE units.

The method of recovering the agglomerate of the fluorinated polymer may be filtration or centrifugal separation and is preferably filtration.

### ·Washing step

The method for producing the fluorinated polymer preferably further has a step of washing the recovered fluorinated polymer (hereinafter also referred to as "step 3").

By step 3, other components (for example the emulsifier, the monomers, the polymerization initiator, and reaction products thereof) attached to the fluorinated polymer can be removed, and a crosslinked rubber article having desired physical properties is likely to be obtained.

The washing liquid in the washing step may be the above-described aqueous medium, and is preferably water, more preferably ultrapure water.

Specific examples of the washing method include a method of dipping the recovered fluorinated polymer in a washing liquid, and a method of showering the recovered fluorinated polymer with a washing liquid.

The amount of the washing liquid in the washing step is preferably 1 to 50 times, more preferably 3 to 30 times, further preferably 5 to 15 times, the total mass of the fluorinated polymer.

The temperature of the washing liquid in the washing step is preferably 5 to 50°C, more preferably 10 to 40°C, further preferably 15 to 30°C.

By the above production method, the fluorinated polymer is obtained.

In particular, by the production method, a fluorinated polymer of which the content of the PAVE units in the fluorinated polymer to the total content of the TFE units and the PAVE units is 20 to 95 mol% is preferably produced.

### <Solid composition>

The fluorinated polymer obtained by the above production method may be in the form of a solid composition.

In this specification, the solid composition means a composition having a solid content mass of 99 mass% or more.

The solid content mass is calculated by the following method based on the mass before and after heating.

2.0 g of the solid composition is heated at 170°C for 20 minutes, the mass of the residue is weighed, and the solid content mass is calculated in accordance with the following formula.$Solid content mass \left(mass%\right) = 100 \times \left(mass of residue\right) / \left(mass of solid composition\right)$

The content of the fluorinated polymer in the solid composition, to the total mass of the solid composition, is preferably 99.0 to 100 mass%, more preferably 99.5 to 100 mass%, further preferably 99.8 to 100 mass%.

The solid composition containing the fluorinated polymer preferably contains substantially no emulsifier.

"The solid composition contains substantially no emulsifier" means a content of the emulsifier to the total mass of the solid composition of 10 mass ppm or less, preferably 150 mass ppb or less, more preferably 50 mass ppb or less. The lower limit of the content of the emulsifier is 0 mass ppb.

The method of measuring the content of the emulsifier, and the emulsifier which the solid composition may contain, are as defined above.

The content of the compound represented by the formula (S1) in the solid composition is preferably 10 mass ppm or less, more preferably 150 mass ppb or less, further preferably 50 mass ppm or less. The lower limit of the content of the formula (S1) is 0 mass ppb.

The metal content of the solid composition to the total mass of the solid composition is preferably 50 mass ppm or less, more preferably 20 mass ppm or less, further preferably 10 mass ppm or less. The content is also preferably the measurement limit or less in the following measurement method. The lower limit may be 1 mass ppb.

The metal content is the total content of 29 metal elements (Fe, Na, K, Li, Be, Mg, Al, Ca, Ti, V, Cr, Mn, Co, Ni, Cu, Zn, Ga, Rb, Sr, Zr, Mo, Ag, Cd, In, Sn, Cs, Ba, Pb, and , Bi) measured by external calibration method using an inductively coupled plasma mass spectroscope.

The method of measuring the metal content of the solid composition may be a method of incinerating the solid composition and dissolving the obtained ash in an acid, and subjecting the solution to measurement by an inductively coupled plasma mass spectroscope.

In the method for producing the fluorinated polymer, by using the stirring apparatus provided with the agitating impeller, it is not necessary to use an agglomerating agent containing a metal in recovery of the fluorinated polymer. Thus, the metal content of the solid composition can readily be adjusted to be within the above range.

The solid composition is also preferably a fluorinated elastomer.

The "fluorinated elastomer" is an elastic fluorinated polymer that has a storage elastic modulus G' at 100°C at a frequency of 50 cpm, measured in accordance with ASTM D6204, of 80 kPa or more and that has no melting point, and is distinguished from a fluororesin.

### (Shape)

The solid composition containing the fluorinated polymer may be deformed into an appropriate shape in accordance with the method for producing the crosslinked rubber article and the application of the crosslinked rubber article.

The solid composition may be in the form of a sheet, granules, a tube or a fiber, or may not be formed into a specific shape.

### <Crosslinking agent>

The present composition contains a crosslinking agent.

The crosslinking agent is preferably at least one member selected from the group consisting of an organic peroxide and a compound having two or more amino groups (hereinafter also referred to as "polyamine compound"), and in view of more excellent crosslinkability of the fluorinated polymer, it preferably contains an organic peroxide.

The crosslinking agent may be used alone or in combination of two or more.

Specific examples of the organic peroxide include a dialkyl peroxide, α,α'-bis(tert-butylperoxy)-p-diisopropylbenzene, α,α'-bis(tert-butylperoxy)-m-diisopropylbenzene, benzoyl peroxide, tert-butylperoxy benzene, 2,5-dimethyl-2,5-di(benzoylperoxy)hexane, tert-butyl cumyl peroxide, and dicumyl peroxide. Among them, a dialkyl peroxide, α,α'-bis(tert-butylperoxy)-p-diisopropylbenzene, and α,α'-bis(tert-butylperoxy)-m-diisopropylbenzene are preferred.

Specific examples of the dialkyl peroxide include 1,1-di(tert-butyl peroxy)-3,3,5-trimethylcyclohexane, 2,5-dimethylhexane-2,5-dihydroxy peroxide, tert-butylperoxy maleate, tert-butylperoxy isopropyl carbonate, di-tert-butyl peroxide, 2,5-dimethyl-2,5-di(tert-butylperoxy)hexane, 2,5-dimethyl-2,5-di(tert-butylperoxy)-3-hexyne. Among them, dicumyl peroxide and 2,5-dimethyl-2,5-di(tert-butylperoxy)hexane are preferred.

The polyamine compound may be a compound having hydrogen atoms of an aliphatic hydrocarbon replaced with amino groups or may be a compound having hydrogen atoms of an aromatic hydrocarbon replaced with amino groups, and in view of more excellent effect of the present invention, preferably a compound having a hydrogen atom of an aromatic hydrocarbon replaced with an amino group.

The polyamine compound preferably contains a fluorine atom, whereby it has favorable compatibility with the fluorinated polymer, and thus a crosslinked rubber article with smaller compression set at high temperature under high compression will be obtained.

Specific examples of the polyamine compound include hexamethylenediamine, hexamethylenediamine carbamate, 2,2-bis[4-(4-aminophenoxy)phenyl]propane, 2,2-bis(3-amino-4-hydroxyphenyl)propane, 2,2-bis(3-amino-4-hydroxyphenyl)hexafluoropropane (hereinafter also referred to as "BOAP", another name: bisaminophenol AF), 2,2-bis(3,4-diaminophenyl)propane, 2,2-bis(3,4-diaminophenyl)hexafluoropropane, 2,2-bis(3-amino-4-(N-phenylamino)phenyl)hexafluoropropane, 4,4'-methylenedianiline, m-phenylenediamine, dihydrazide adipate, and the compound represented by the formula (XII) in Japanese Patent No. 5833657, and in view of more excellent effects of the present invention, preferred is BOAP.

The content of the crosslinking agent is, per 100 parts by mass of the fluorinated polymer, preferably 0.3 to 10 parts by mass, more preferably 0.3 to 5 parts by mass, further preferably 0.5 to 3 parts by mass.

### <Crosslinking aid>

The present composition may contain a crosslinking aid. The crosslinking aid is used to improve crosslinkability of the fluorinated polymer.

The crosslinking aid is preferably a compound having two or more reactive functional group in one molecule. Specific examples of the reactive functional group include a carbon-carbon double bond-containing group, a halogen atom, an acid anhydride residue, a carboxy group, an amino group, a cyano group and a hydroxy group. The two or more reactive functional groups preset in one molecule of the crosslinking aid may be the same or different.

Specific examples of the carbon-carbon double bond-containing group include alkenyl groups such as a vinyl group, an allyl group and a methallyl group, unsaturated acyl groups such as an acryloyl group and a methacryloyl group, and a maleimide group. The carbon-carbon double bond-containing group is preferably a C₂₋₄ alkenyl group, particularly preferably an allyl group.

Specific examples of the crosslinking aid includes a compound represented by the following formula (7), triallyl cyanurate, triallyl isocyanurate, trimethallyl isocyanurate, 1,3,5-triacryloyl hexahydro-1,3,5-triazine, triallyl trimellitate, m-phenylenediamine bismaleimide, p-quinone dioxime, p,p'-dibenzoylquinone dioxime, dipropargyl terephthalate, diallyl phthalate, N,N',N",N"'-tetraallyl terephthalamide, a vinyl group-containing siloxane oligomer (e.g. polymethylvinylsiloxane, polymethylphenylvinylsiloxane). Among them, preferred are a compound represented by the following formula (7), triallyl cyanurate, triallyl isocyanurate and trimethallyl isocyanurate, more preferred are a compound represented by the following formula (7) and triallyl isocyanurate, and in view of more excellent transparency of the crosslinked rubber, particularly preferred is a compound represented by the following formula (7).

The crosslinking aid may be used alone or in combination of two or more of them.

The formula (7) is as follows.

(CR⁴¹R⁴²=CR⁴³)₂R⁴⁴ formula (7)

In the formula (7), R⁴¹, R⁴² and R⁴³ are each independently a hydrogen atom, a fluorine atom, a C₁₋₅ alkyl group or a C₁₋₅ fluoroalkyl group, R⁴⁴ is a C₁₋₁₈ bivalent fluorohydrocarbon group or a group having an etheric oxygen atom at a terminal end or between a carbon-carbon bond of the fluorohydrocarbon group. The two R⁴¹, the two R⁴² and the two R⁴³ may be respectively the same or different from each other.

In a case where each of R⁴¹, R⁴² and R⁴³ is an alkyl group or a fluoroalkyl group, it may be linear or branched, and is preferably linear.

In a case where each of R⁴¹, R⁴² and R⁴³ is an alkyl group or a fluoroalkyl group, it has 1 to 5 carbon atoms, more preferably 1 to 3 carbon atoms, particularly preferably 1 or 2 carbon atoms.

In view of more excellent polymerizability of BO, it is preferred that all of R⁴¹, R⁴² and R⁴³ are hydrogen atoms.

The fluorohydrocarbon group as R⁴⁴ is preferably a perfluorohydrocarbon group in view of more excellent heat resistance of the crosslinked rubber article.

R⁴⁴ may be linear, branched or cyclic, and is preferably linear or branched, particularly preferably linear. The number of carbon atoms of R⁴⁴ is 1 to 18, preferably 2 to 8, particularly preferably 3 to 7.

In a case where R⁴⁴ has an etheric oxygen atom, the number of the etheric oxygen atom in R⁴⁴ is preferably 1 to 6, more preferably 1 to 3, particularly preferably 1 or 2. In a case where R⁴⁴ has an etheric oxygen atom, the etheric oxygen atom is present preferably at the terminal end of R⁴⁴.

The compound preferably the formula (7) is preferably C3DVE, C4DVE, CH₂=CH(CF₂)₂CH=CH₂, CH₂=CH(CF₂)₄CH=CH₂ or C6DV, particularly preferably C6DV.

In the present composition, the content of the crosslinking aid per 100 parts by mass of the fluorinated polymer, is preferably 0.1 to 2.5 parts by mass, more preferably 0.1 to 2.0 parts by mass, further preferably 0.1 to 1.0 part by mass. When the content is the lower limit value of the above range or more, the crosslinked rubber article will be more excellent in hardness, and when the content is the upper limit value of the above range or less, the crosslinked rubber article will be more excellent in transparency.

### <Filler>

The present composition may contain a filler.

The filler preferably contains at least one member selected from the group consisting of carbon black, barium sulfate, calcium metasilicate, calcium carbonate, titanium oxide, silicon dioxide, clay and talc.

The filler may be contained alone or in combination of two or more.

In the present composition, the content of the filler per 100 parts by mass of the fluorinated polymer, is preferably 0.1 to 100 parts by mass, more preferably 1 to 50 parts by mass, further preferably 5 to 30 parts by mass.

### <Other component>

The present composition may contain a component other than the above (hereinafter also referred to as "other component").

Specific examples of the other component include a catalyst, an acid receptor, a scorch retarder, a crown ether and a mold release agent.

The other component may be contained alone or in combination of two or more.

In the present composition, the content of the other component per 100 parts by mass of the fluorinated polymer, is preferably 0.1 to 15 parts by mass, more preferably 0.5 to 5 parts by mass.

### [Method for producing fluorinated polymer composition]

The method for producing a fluorinated polymer composition of the present invention (hereinafter also referred to as "the method for producing the present composition") comprises:
step 1 of polymerizing monomers containing TFE and PAVE in an aqueous dispersion that contains substantially no water-soluble emulsifier, that contains a first fluorinated polymer containing TFE units and PAVE units, and that contains an aqueous medium (first aqueous dispersion) to produce a second fluorinated polymer; and
step 2 of adding a crosslinking agent to the second fluorinated polymer to obtain a fluorinated polymer composition containing the second fluorinated polymer and the crosslinking agent.

In the method for producing the present composition, in the first fluorinated polymer, the content of the PAVE units to the total content of the TFE units and the PAVE units is 20 to 95 mol%.

In the method for producing the present composition, in the second fluorinated polymer, the content of the PAVE units to the total content of the TFE units and the PAVE units is 20 to 95 mol%.

In the method for producing the present composition, before the start of the polymerization of the monomers, the content of the first fluorinated polymer is 0.01 to 4.0 mass% to the total mass of the first aqueous dispersion.

According to the method for producing the present composition, the above-described present composition can readily be obtained. In this case, the second fluorinated polymer in the fluorinated polymer composition obtained by the method for producing the present composition corresponds to the fluorinated polymer in the above-described present composition.

The fluorinated polymer composition obtained by the method for producing the present composition is used preferably for production of the crosslinked rubber article to be described below.

Now, the respective steps will be described.

### [Step 1]

In step 1, the above-described specific monomers are polymerized in the first aqueous dispersion.

The first aqueous dispersion used in step 1 of the method for producing the present composition, is the same as the first aqueous dispersion used in second aqueous dispersion production step in the above described method for producing the fluorinated polymer.

Further, the specific method and preferred embodiment of step 1 in the method for producing the present composition, are the same as the specific method and the preferred embodiment of second aqueous dispersion production step in the method for producing the fluorinated polymer.

By step 1, the second aqueous dispersion containing the second fluorinated polymer is obtained.

The second fluorinated polymer and the second aqueous dispersion obtained in step 1, including the preferred embodiments, are the same as the fluorinated polymer and the second aqueous dispersion in the above-described method for producing the fluorinated polymer.

### [Step 2]

Step 2 is a step of adding a crosslinking agent to the second fluorinated polymer obtained in step 1 to obtain a fluorinated polymer composition containing the second fluorinated polymer and the crosslinking agent.

The crosslinking agent including the preferred embodiment is the same as the crosslinking agent contained in the above-described present composition. The amount of the crosslinking agent added is preferably the same as the content of the crosslinking agent in the above-described present composition.

In step 2, in addition to the crosslinking agent, the components contained in the above-described present composition (the crosslinking aid, the filler and the other component) may be added. The crosslinking aid, the filler and the other component, including the preferred embodiments, are the same as the crosslinking aid, the filler and the other component which may be contained in the above-described present composition. The amounts of the components added are preferably the same as the contents of the respective components in the above-described present composition.

In step 2, it is preferred to conduct a treatment of mixing the respective components. The mixing treatment may be conducted by using a rubber mixing apparatus such as a roll, a kneader, a Banbury mixer or an extruder.

After the components are mixed to obtain a mixture, the mixture may be molded. Specific examples of the method of molding the mixture include compression molding, injection molding, extrusion, calendering, and a method of dissolving the mixture in a solvent and applying the solution to a substrate or the like by dipping or coating.

### <Other step>

The method for producing the present composition may have a step other than step 1 and step 2 (hereinafter also referred to as "other step").

The other step may be a recovery step in the above-described method for producing the fluorinated polymer. The specific method and the preferred embodiment of the recovery step are the same as the specific method and the preferred embodiment of the recovery step in the above-described method for producing the fluorinated polymer.

The recovery step is conducted after step 1 and before step 2.

By using the fluorinated polymer composition obtained by the method for producing the present composition, the optimum vulcanization time Te obtained in accordance with the formula A is readily adjusted to be 2.3 minutes or more. More specifically, in the method for producing the present composition, by adjusting the contents of the TFE units and the PAVE units in the first fluorinated polymer, by adjusting the contents of the TFE units and the PAVE units in the second fluorinated polymer and by adjusting the content of the first fluorinated polymer in the first aqueous dispersion optionally in combination, the optimum vulcanization time Te obtained in accordance with the formula A will be within the above preferred range.

By using the fluorinated polymer obtained by the method for producing the present composition, requirement 1 regarding the 2% weight loss temperature of the fluorinated polymer and requirement 2 regarding the difference ΔTd between the 5% weight loss temperature and the 2% weight loss temperature of the fluorinated polymer, are likely to be satisfied. More specifically, in the method for producing the present composition, for example, by adjusting the content of the first fluorinated polymer in the first aqueous dispersion, the content of a low molecular weight component in the entire fluorinated polymer and the content of a high molecular weight component in the entire fluorinated polymer can be adjusted, and the above-described requirement 1 and requirement 2 can be satisfied.

### [Crosslinked rubber article]

The crosslinked rubber article of the present invention is a rubber article obtained by crosslinking the fluorinated polymer in the above-described present composition.

As a method of crosslinking the fluorinated polymer in the present composition, preferred is a crosslinking method by heating the present composition.

The crosslinking method by heating may, for example, be specifically heat press crosslinking, steam crosslinking or hot air crosslinking.

The heating conditions are preferably at 100 to 400°C for 1 second to 24 hours.

The crosslinked rubber obtained by heating (primarily crosslinking) the present composition may further be heated for secondary crosslinking. By secondary crosslinking, mechanical properties, compression set and other properties of the crosslinked rubber can be stabilized or improved.

The heating conditions for the secondary crosslinking are preferably at 80 to 350°C for 30 minutes to 48 hours.

As a crosslinking method other than the crosslinking by heating, a method of irradiating the present composition with radiation to crosslink the fluorinated polymer may be mentioned. Specific examples of the radiation may be electron rays and ultraviolet rays.

The hardness (Shore-A) of the crosslinked rubber article is preferably 72 to 100, more preferably 73 to 80, further preferably 73 to 75.

The hardness of the crosslinked rubber article is measured by the method described in EXAMPLES.

### [Application]

The crosslinked rubber article is suitable as materials for O-rings, sheets, gaskets, oil seals, diaphragms, V-rings and the like. The crosslinked rubber article can also be used for various applications such as heat-resistant chemical-resistant sealing materials, heat-resistant oil-resistant sealing materials, wire sheath materials, sealing materials for semiconductor manufacturing equipment, sealing materials for liquid crystal display panel manufacturing equipment, sealing materials for light emitting diode manufacturing equipment, corrosion-resistant rubber paints, sealing materials for urearesistant grease etc., rubber paints, adhesive rubber, hoses, tubes, calendered sheets (rolls), sponges, rubber rolls, oil drilling members, heat dissipation sheets, solutioncrosslinked materials, rubber sponges, bearing seals (urea resistant grease etc.), linings (resistant to chemical), insulating sheets for vehicles, insulating sheets for electronic equipment, rubber bands for watches, endoscope packings (resistant to amine), bellows hoses (produced from calendered sheets), packings/valves for water heaters, fenders (for marine civil engineering and ships), fibers and non-woven fabrics (protective clothing etc.), sealing materials for substrates, rubber gloves, stators of single-screw eccentric pumps, parts for urea SCR systems, vibration isolators, damping materials, sealants, additives to other materials, and toys.

### EXAMPLES

Now, the present invention will be described in further detail with reference to Examples. Ex. 1 to 3 are Examples of the present invention, and Ex. 4 to 6 are Comparative Examples. However, it should be understood that the present invention is by no means restricted thereto.

### <Method of quantitative determination of emulsifier contained in solid composition>

### (Preparation of measurement sample)

The solid composition obtained in each Ex. was freeze-ground by a freeze-grinding machine Freezer Mill 6775 (manufactured by SPEX) under the following conditions. When freeze-ground, the solid composition was preliminarily mixed with dibutylhydroxytoluene (BHT) in an amount corresponding to 10 mass% of the total mass of the solid content to obtain a ground powder. The freeze-grinding conditions were such that the solid composition: 3 g, BHT: 0.3 g, run time: 5 mins, rate:15 cps, and cycle: 3.

5 mL of methanol was added to 0.25 g of the obtained ground powder, and the mixture was subjected to ultrasonic treatment at 50°C for 2 hours and then subjected to centrifugal separation (5000 rpm, 5 minutes) to precipitate the fluorinated polymer, and the resulting supernatant was taken as an extract. The obtained extract was subjected to LC/MS/MS measurement. With respect to the emulsifier having a fluorine atom and the hydrocarbon emulsifier in the extract, measurement was conducted using a liquid chromatograph mass spectrometer. The measurement equipment configuration and the LC-MS measurement conditions are shown in Table 1. Using aqueous solutions of the emulsifier having a fluorine atom and the hydrocarbon emulsifier each having a known concentration, aqueous solutions each at 5 or more contents were prepared, and LC/MS analysis was conducted on the aqueous solutions at the respective contents. The relation between the content and the area at the corresponding content was plotted to draw an analytical curve. Using the obtained analytical curve, the areas of the LC/MS chromatogram of the emulsifier having a fluorine atom and the hydrocarbon emulsifier in the extract were converted to the contents of the emulsifier having a fluorine atom and the hydrocarbon emulsifier.

**Table 1**

| LC unit | | |
|---|---|---|
| Apparatus | CTO-40C manufactured by Shimadzu Corporation | |
| Column | Shim-pack Velox SP-C18 2.7 µm, 150 mm × 2.1 mm | |
| Mobile phase | A 20mM CH₃COONH₄/H₂O | |
| | B CH₃OH | |
| | 0→0.5 min | A:B=80:20→A:B=75:25 Linear gradient |
| | 0.5→3.5 min | A:B=75:25→A:B=70:30 Linear gradient |
| | 3.5→5.0 min | A:B=70:30→A:B=40:60 Linear gradient |
| | 5.0→9.5 min | A:B=40:60→A:B=20:80 Linear gradient |
| | 9.5→10.0 min | A:B=20:80→A:B=2:98 Linear gradient |
| | 10.0→20.0 min | A:B=2:98 |
| | 20.0→20.1 min | A:B=2.0:98.0→A:B=80:20 Linear gradient |
| | 20.1→25.0 min | A:B=80:20 |
| Flow rate | 0.25 mL/min | |
| Column temperature | 40°C | |
| Sample injection amount | 2 µL | |
| MS unit | | |
| Apparatus | LCMS-8060NX manufactured by Shimadzu Corporation | |
| Measurement mode | MRM (Multiple Reaction Monitoring) | |
| | ESI (Electrospray ionization) | |
| Ionization method | Negative mode | |

The MRM measurement parameters are properly selected depending upon the structures of the emulsifier having a fluorine atom and the hydrocarbon emulsifier to be measured. The MRM parameters may be literature values or may be calculated by an LC-MS apparatus. Determination of the MRM parameters by an LC-MS apparatus are specifically as follows. Using an LC/MS apparatus (manufactured by Shimadzu Corporation, LCMS-8060NX), product ion search is selected, the molecular weights of the emulsifier having a fluorine atom and the hydrocarbon emulsifier to be measured are input, and precursor ion selection, precursor adjustment, voltage optimization, and product m/z optimization are performed. The calculated MRM measurement parameters are used. As an example, the MRM measurement parameters of the compounds (S2) and (S4) which are emulsifiers having a fluorine atom are shown in Tables. In the formulae (S2) and (S4), MS is a hydrogen atom, a metal element, NR4 (R is a hydrogen atom or a C₁₋₁₀ organic group, and the four R may be the same or different), imidazolium which may have a substituent, pyridinium which may have a substituent, or phosphonium which may have a substituent.

F-(CF2)n1-COOMS (S2)

F-(CF2)n2-SO3MS (S4)

wherein n1 is an integer of 3 to 17, and n2 is an integer of 4 to 12.

**Table 2**

| Compound | Number of carbon atoms | n= | Precursor | Product |
|---|---|---|---|---|
| Perfluorobutanoic acid | 4 | 3 | 213 | 169 |
| Perfluoropentanoic acid | 5 | 4 | 263 | 219 |
| Perfluorohexanoic acid | 6 | 5 | 313 | 269 |
| Perfluoroheptanoic acid | 7 | 6 | 363 | 319 |
| Perfluorooctanoic acid | 8 | 7 | 413 | 369 |
| Perfluorononanoic acid | 9 | 8 | 463 | 419 |
| Perfluorodecanoic acid | 10 | 9 | 513 | 469 |
| Perfluoroundecanoic acid | 11 | 10 | 563 | 519 |
| Perfluorododecanoic acid | 12 | 11 | 613 | 569 |
| Perfluorotridecanoic acid | 13 | 12 | 663 | 619 |
| Perfluorotetradecanoic acid | 14 | 13 | 713 | 669 |
| Perfluorohexadecanoic acid | 16 | 15 | 813 | 769 |
| Perfluorooctadecanoic acid | 18 | 17 | 913 | 869 |

**[Table 3]**

| Compound | Number of carbon atoms | n= | Precursor | Product |
|---|---|---|---|---|
| Perfluorobutanesufononic acid | 4 | 4 | 299 | 99 |
| Perfluoropentanesulfonic acid | 5 | 5 | 349 | 99 |
| Perfluorohexanesulfonic acid | 6 | 6 | 399 | 99 |
| Perfluoropentanesulfonic acid | 7 | 7 | 449 | 99 |
| Perfluorooctanesulfonic acid | 8 | 8 | 499 | 99 |
| Perfluorononanesulfonic acid | 9 | 9 | 549 | 99 |
| Perfluorodecanesulfonic acid | 10 | 10 | 599 | 99 |
| Perfluorododecanesulfonic acid | 12 | 12 | 699 | 99 |

### <Quantitative determination of emulsifier having fluorine atom and hydrocarbon emulsifier contained in solid composition>

Specifically, first, methanol standard solutions of the emulsifier having a fluorine atom and the hydrocarbon emulsifier, each having a known concentration of 1 to 180 ng/g, were prepared, each at 5 concentrations. From the respective sample concentrations and the integrated peak areas, by first-order approximation, a was obtained from the formula (A1-1). $A = a \times X$ (A1-1) A: peak area of emulsifier, X: concentration (ng/g) of emulsifier

The amount of the emulsifier contained in the extract was calculated from the formula (A1-2). a in the formula (A1-2) represents a obtained from the formula (A1-1). $XCm = ACm / a$ A(1-2)
XCm: content (ng/g) of emulsifier in extract
ACm: peak area of emulsifier in extract

The quantitative determination limit in this measurement is 1 ng/g.

The content (ZCm) of the emulsifier in the solid composition to the total mass of the solid composition was obtained from the following formula (A1-3). $ZCm = XCm \times ρ 1 \times La / W 1$ (A1-3)
ZCm: content of emulsifier contained in solid composition
ρ1: density of extraction solvent (methanol in each Ex.)
La: volume of extraction solvent (5 mL in each Ex.)
W1: mass of sample used for extraction (2.5 g of solid content in each Ex.)

### <Method of quantitative determination of formula (S1) and formula (S3) contained in solid composition>

The solid composition obtained in each Ex. was freeze-ground by a freeze-grinding machine Freezer Mill 6775 (manufactured by SPEX) under the following conditions. When freeze-ground, the solid composition was preliminarily mixed with dibutylhydroxytoluene (BHT) in an amount corresponding to 10 mass% of the total mass of the solid content to obtain a ground powder. The freeze-grinding conditions were such that the solid composition: 3 g, BHT: 0.3 g, run time: 5 mins, rate: 15 cps, and cycle: 3.

5 mL of methanol was added to 2.5 g of the obtained ground powder, and the mixture was subjected to ultrasonic treatment at 50°C for 2 hours and then subjected to centrifugal separation (5000 rpm, 5 minutes) to precipitate the fluorinated polymer, and the resulting supernatant was taken as an extract.

The obtained extract was subjected to LC/MS/MS measurement. With respect to the emulsifier having a fluorine atom in the extract, measurement was conducted using a liquid chromatograph mass spectrometer. The measurement equipment configuration and the LC-MS measurement conditions are as described above. Using aqueous solutions of the emulsifier having a fluorine atom having a known concentration, methanol solutions at 5 or more contents were prepared, and LC/MS analysis was conducted on the methanol solutions at the respective contents. The relation between the content and the area at the corresponding content was plotted to draw an analytical curve. Using the obtained analytical curve, the area of the LC/MS chromatogram of the emulsifier having a fluorine atom in the extract was converted to the content of the emulsifier having a fluorine atom.

With respect to the content of the compound represented by the formula (S1) contained in each extract, the contents of the compounds of the formula (S1) wherein n1=3 to 13 were obtained by conversion to a corresponding perfluorocarboxylic acid (formula (S2)) with the same number of carbon atoms. With respect to the content of the compound represented by the formula (S3) in the each extract, the contents of the compounds of the formula (S3) wherein n2=4 to 10 were obtained by conversion to a corresponding perfluorosulfonic acid (formula (S4)) with the same number of carbon atoms. The MRM parameters of the formula (S1) and the formula (S3) are as shown in Tables 4 and 5.

Specifically, first, methanol standard solutions of a perfluorocarboxylic acid and a perfluorosulfonic acid, each having a known concentration of 1 to 180 ng/g, were prepared, each at 5 concentrations. From the respective sample concentrations and the integrated peak areas, by first-order approximation, a and a' were obtained from the formula (A2-1) and the formula (A2-1'). $A = a \times X$ (A2-1) A: peak area of perfluorocarboxylic acid, X: concentration (ng/g) of perfluorocarboxylic acid $A ′ = a ′ \times X ′$ (A2-1') A': peak area of perfluorosulfonic acid, X': concentration (ng/g) of perfluorosulfonic acid

**Table 4**

| Compound represented by formula (S1) (value of n1 in formula (S1)) | Number of carbon atoms | Precursor ion | Product ion |
|---|---|---|---|
| 3 | 4 | 195 | 131 |
| 4 | 5 | 245 | 181 |
| 5 | 6 | 295 | 231 |
| 6 | 7 | 345 | 281 |
| 7 | 8 | 395 | 331 |
| 8 | 9 | 445 | 381 |
| 9 | 10 | 495 | 431 |
| 10 | 11 | 545 | 481 |
| 11 | 12 | 595 | 531 |
| 12 | 13 | 645 | 581 |
| 13 | 14 | 695 | 631 |

**Table 5**

| Compound represented by formula (S3) (value of n2 in formula (S3)) | Number of carbon atoms | Precursor ion | Product ion |
|---|---|---|---|
| 4 | 4 | 281 | 99 |
| 5 | 5 | 331 | 99 |
| 6 | 6 | 381 | 99 |
| 7 | 7 | 431 | 99 |
| 8 | 8 | 481 | 99 |
| 9 | 9 | 531 | 99 |
| 10 | 10 | 581 | 99 |

Specifically, first, by the above liquid chromatography mass spectroscope, peak areas of the compounds represented by the formula (S1) and the formula (S3) contained in each extract were measured.

The contents of the compound represented by the formula (S1) and the compound represented by the formula (S3) were calculated respectively from the formula (A2-2) and the formula (A2-2'). a in the formula (A2-2) represents a obtained from the formula (A2-1), and a' in the formula (A2-2') represents a' obtained from the formula (A2-1'). $XCm = ACm / a$ (A2-2)
XCm: content (ng/ g) of compound represented by formula (S1) with number of carbon atoms (n+1) in extract
ACm: peak area of compound represented by formula (S1) with number of carbon atoms (n+1) in extract $XCm ′ = ACm ′ / a ′$ (A2-2')
XCm': content (ng/ g) of compound represented by formula (S3) with number of carbon atoms n in extract
ACm': peak area of compound represented by formula (S3) with number of carbon atoms n in extract

The quantitative determination limit in this measurement is 1 ng/g.

The content (ZCm) of the compound of the formula (S1) in the solid to the total mass of the solid was obtained from the following formula (A2-3). $ZCm = XCm \times ρ 1 \times La / W 1$ (A2-3)
ZCm: content of compound represented by formula (S1) with number of carbon atoms (n+1) contained in solid
ρ1: density of extraction solvent (methanol in each Ex.)
La: volume of extraction solvent (5 mL in each Ex.)
W1: mass of sample used for extraction (2.5 g of solid content in each Ex.)

The content (ZCm') of the compound of the formula (S3) in the solid to the total mass of the solid was obtained from the following formula (A2-4). $ZCm ′ = XCm ′ \times ρ 1 \times La / W 1$ (A2-4)
ZCm': content of compound represented by formula (S3) with number of carbon atoms n contained in solid
ρ1: density of extraction solvent (methanol in each Ex.)
La: volume of extraction solvent (5 mL in each Ex.)
W1: mass of sample used for extraction (2.5 g of solid content in each Ex.)

### [Production of material dispersion A]

In a stainless steel pressure resistant reactor having an internal capacity of 2.2 L, equipped with an anchor impeller, ultrapure water (1130 g), a 30 mass% aqueous ammonia solution (30 mg), PMVE (72 g) and TFE (14 g) were charged and heated to 90°C with stirring at 600 rpm. Then, an aqueous ammonium persulfate solution (5.0 mass%, 30 cc) was added to initiate polymerization. Since the pressure in the reactor decreased as the polymerization started, TFE was added to keep a constant pressure. When the amount of TFE injected reached 4 g, the reactor was cooled to terminate the polymerization. Gas remaining in the reactor was recovered, and liquid was withdrawn. This liquid was taken as material dispersion A.

The material dispersion A was freeze-agglomerated and subjected to filtration, and the obtained fluorinated polymer 1A was analyzed by NMR and as a result, PMVE units/ TFE units=34/66 (molar ratio).

### [Production of material dispersion B]

To the material dispersion A, HPR4002Cl (manufactured by DuPont, anion exchange resin, 200 g) was added. 150 minutes after start of stirring, the mixture was subjected to filtration to separate the material dispersion from the ion exchange resin. To the obtained filtrate, AmberLite (registered trademark) HPR650H (manufactured by DuPont, cation exchange resin, 50 g) was added. 60 minutes after start of stirring, the mixture was subjected to filtration to separate the material dispersion from the ion exchange resin to obtain material dispersion B. The material dispersion B had particles of the fluorinated polymer 1A dispersed in the aqueous medium, and had a content of the fluorinated polymer 1A of 0.6 mass% to the total mass of the material dispersion B.

### [Ex. 1]

### [Production of fluorinated polymer]

Into a stainless steel pressure resistant reactor having an internal capacity of 2.2 L, equipped with an anchor impeller, the material dispersion B (1000 g) and ultrapure water (175 g) were charged to obtain aqueous dispersion B (first aqueous dispersion). The content of the fluorinated polymer 1A was 0.4 mass% to the total mass of the aqueous dispersion B.

The aqueous dispersion B contained substantially no water-soluble emulsifier. Specifically, the contents of emulsifier A to be described below and compounds represented by the formulae (S1) to (S4) were measured by the following method. In production of the aqueous dispersion B, an emulsifier other than the emulsifier A and the compounds represented by the formulae (S1) to (S4) was not formed from the components used for production of the aqueous dispersion B nor used, and thus not contained in the aqueous dispersion B.

The solid content of the aqueous dispersion B was measured, and the aqueous dispersion B in an amount corresponding to 0.05 g of the solid was weighed in a 100 mL screw-cap tube. Then, to the weighed aqueous dispersion B, water and methanol were added so that 40 g of water/methanol=50/50 vol%. Then, the mixture was well shaken until agglomeration. The solid was removed, and liquid phase was subjected to centrifugal separation at 4000 rpm for 1 hour, and supernatant was collected as an extract. Measurement was conducted in the same manner as the above method of measuring the content of the emulsifier except for the sample preparation, and as a result, the contents of the compounds represented by the formulae (S1) to (S4) were the quantitative determination limit or less to the aqueous dispersion B.

To the aqueous dispersion B, perfluoro-1,4-diiodobutane (2.0 g), PMVE (72 g) and TFE (14 g) were charged and heated to 80°C with stirring at 600 rpm. TFE and PMVE were injected until the pressure in the reactor reached 1.2 MPa [gauge], and an aqueous ammonium persulfate solution (aqueous APS solution, 1.0 mass%, 20 mL) was added to initiate polymerization. Since the pressure in the reactor decreased as the polymerization started, TFE was added to keep a constant pressure. When the amount of TFE injected reached 160 g and the amount of PMVE injected reached 133 g, the reactor was cooled to terminate the polymerization. The polymerization time was 300 minutes.

Gas remaining in the reactor after the completion of the polymerization was recovered, and liquid was withdrawn from the reactor. This liquid was taken as aqueous dispersion 1. The aqueous dispersion 1 was a dispersion that had particles (average particle size: 92.7 nm) containing fluorinated polymer 1B dispersed in the aqueous medium and had a solid content of 20.5 mass%.

The aqueous dispersion was stirred by a disc turbine impeller for 150 minutes at 1000 rpm, and agglomerate was collected by filtration and recovered. The recovered agglomerate was washed with 2000 g of ultrapure water at 25°C and dried to obtain rubber-like fluorinated polymer 1B.

The obtained fluorinated polymer 1B was analyzed by NMR and as a result, the content of the TFE units was 66 mol% to the total content of all units of the fluorinated polymer 1B, and the content of the PAVE units (PMVE units) was 34 mol% to the total content of all units in the fluorinated polymer 1B.

As a result of analysis by NMR, the content of iodine atoms in the fluorinated polymer 1B to the total mass of the fluorinated polymer 1B was 0.05 mass%.

### [Production of fluorinated polymer composition]

Components in amounts as identified in Table 6 were blended and kneaded by a two-roll mill at room temperature for 10 minute to obtain a mixture. The obtained mixture was processed into a 3 mm-thick sheet-shaped fluorinated polymer composition 1 while adjusting the gap of the two rolls.

Details of the components in Table 6 are as follows, except for the fluorinated polymer 1B.
CB: MT carbon N990, manufactured by Vanderbilt, carbon black
Crosslinking aid: TAIC-WH60, manufactured by Mitsubishi Chemical Corporation, triallyl isocyanurate 60 mass% silica diluted
Crosslinking agent: PERHEXA 25B, manufactured by NOF CORPORATION, 2,5-dimethyl-2,5-di(t-butylperoxy)hexane
Mold release agent: NONSOUL SN-1, manufactured by NOF CORPORATION, sodium stearate

**Table 6**

| Fluorinated polymer composition 1 | |
|---|---|
| Component | Amount (parts by mass) |
| Fluorinated polymer 1B | 100 |
| CB | 10 |
| Crosslinking aid | 5 |
| Crosslinking agent | 1 |
| Mold release agent | 1 |

### [Production of crosslinked rubber article]

As a pressing apparatus, a 50 ton hydraulic press (model: SA-301 50T type, manufactured by TESTER SANGYO CO., LTD., ram diameter: 180 mm) was prepared. The cavity of a mold provided in the pressing apparatus had a rectangular shape of 150 mm in length and 80 mm in width.

The sheet-shaped fluorinated polymer composition 1 obtained as described above was charged into the mold cavity and subjected to a pressurization treatment at 150°C for 20 minutes, to obtain crosslinked rubber article 1 containing a crosslinked product of the fluorinated polymer 1B in a flat plate shape of 150 mm × 80 mm × 2 mm in thickness.

### [Production of material dispersion C]

Fluorinated polymer 1C was produced by polymerization in the same manner as the production of the material dispersion A except that the amounts of the monomer components were properly changed, and the obtained liquid was taken as material dispersion C. The material dispersion C was freeze-agglomerated and subjected to filtration, and the obtained fluorinated polymer 1C was analyzed by NMR and as a result, PMVE units/TFE units=32/68 (molar ratio).

### [Production of material dispersion D]

Material dispersion D was produced in the same manner as the method for producing the material dispersion B except that the material dispersion C was used instead of the material dispersion A. The material dispersion D had particles of the fluorinated polymer 1C dispersed in the aqueous medium, and had a content of the fluorinated polymer 1C of 0.6 mass% to the total mass of the material dispersion D.

### [Ex. 2]

Into a stainless steel pressure resistant reactor having an internal capacity of 2.2 L, equipped with an anchor impeller, the material dispersion D (1000 g) and ultrapure water (175 g) were charged to obtain aqueous dispersion D (first aqueous dispersion). The content of the fluorinated polymer 1C was 0.4 mass% to the total mass of the aqueous dispersion D. The aqueous dispersion D contained substantially no water-soluble emulsifier. The content of the emulsifier was confirmed by the same method for the aqueous dispersion B.

To the aqueous dispersion D, PMVE (72 g), perfluoro-1,4-diiodobuane (1.7 g) and TFE (14 g) were charged and heated to 80°C with stirring at 600 rpm. TFE and PMVE were injected until the pressure in the reactor reached 1.5 MPa [gauge], and an aqueous APS solution (0.5 mass%, 16 mL) was added to initiate the polymerization. Since the pressure in the reactor decreased as the polymerization started, TFE was added to keep a constant pressure. When the amount of TFE added reached 256 g and the amount of PMVE added reached 217 g, the reactor was cooled to terminate the polymerization. The polymerization time was 290 minutes.

Gas remaining in the reactor after completion of the polymerization was recovered, and liquid was withdrawn from the reactor. This liquid was taken as aqueous dispersion 2. The aqueous dispersion 2 was a dispersion that had particles (average particle size: 140.3 nm) containing the fluorinated polymer 1D dispersed in the aqueous medium, and had a solid content of 28.6 mass%.

The aqueous dispersion 2 was stirred by a paddle impeller at 1000 rpm for 150 minutes, and agglomerate was collected by filtration and recovered. The recovered agglomerate was washed with 2000 g of ultrapure water at 25°C and dried to obtain rubber-like fluorinated polymer 1D.

The obtained fluorinated polymer 1D was analyzed by NMR and as a result, the content of the TFE units to the total content of all units of the fluorinated polymer 1D was 68 mol%, and the content of the PAVE units (PMVE units) to the total content of all units of the fluorinated polymer 1D was 32 mol%.

As a result of analysis by NMR, the content of iodine atoms in the fluorinated polymer 1D to the total mass of the fluorinated polymer 1D was 0.04 mass%.

In the same manner as in Ex. 1 except that the fluorinated polymer 1D was used instead of the fluorinated polymer 1B, 3 mm-thick sheet-shaped fluorinated polymer composition 2 was obtained.

In the same manner as in Ex. 1 except that the sheet-shaped fluorinated polymer composition 2 was used instead of the sheet-shaped fluorinated polymer composition 1, crosslinked rubber article 2 containing a crosslinked product of the fluorinated polymer 1D in a flat plate shape of 150 mm × 80 mm × 2 mm in thickness was obtained.

### [Production of material dispersion E]

Fluorinated polymer 1E was produced by polymerization in the same manner as the production of the material dispersion A except that the amounts of the monomer components were properly changed, and the obtained liquid was taken as material dispersion E. The material dispersion E was freeze-agglomerated and subjected to filtration, and the obtained fluorinated polymer 1E was analyzed by NMR and as a result, PMVE units/TFE units=30/70 (molar ratio).

### [Production of material dispersion F]

Material dispersion F was produced in the same manner as the production of the material dispersion B except that the material dispersion E was used instead of the material dispersion A. The material dispersion F had particles of the fluorinated polymer 1E dispersed in the aqueous medium, and had a content of the fluorinated polymer 1E of 0.5 mass% to the total mass of the material dispersion F.

### [Ex. 3]

Into a stainless steel pressure resistant reactor having an internal capacity of 2.2 L, equipped with an anchor impeller, the material dispersion F (1000 g) was charged to obtain aqueous dispersion F (first aqueous dispersion). The content of the fluorinated polymer 1E was 0.4 mass% to the total mass of the aqueous dispersion F.

To the aqueous dispersion F, ultrapure water (175 g), PMVE (72 g) and TFE (14 g) were charged and heated to 80°C with stirring at 600 rpm. TFE and PMVE were injected until the pressure in the reactor reached 1.5 MPa [gauge], and an aqueous APS solution (0.5 mass%, 16 mL) was added to initiate the polymerization. Since the pressure in the reactor decreased as the polymerization started, TFE was added to keep a constant pressure. When the amount of TFE added reached 6 g, perfluoro-1,4-diiodebutane (2.3 g) was injected. When the amount of TFE added reached 256 g and the amount of PMVE added reached 217 g, the reactor was cooled to terminate the polymerization. The polymerization time was 320 minutes.

Gas remaining in the reactor after completion of the polymerization was recovered, and liquid was withdrawn from the reactor. This liquid was taken as the aqueous dispersion 3. The aqueous dispersion 3 was a dispersion that had particles (average particle size: 96 nm) containing the fluorinated polymer 1F dispersed in the aqueous medium, and had a solid content of 27.6 mass%.

The aqueous dispersion was stirred by a six-bladed turbine impeller at 1000 rpm for 150 minutes, and agglomerate was collected by filtration and recovered. The recovered agglomerate was washed with 2000 g of ultrapure water at 25°C and dried to obtain rubber-like fluorinated polymer 1F.

The obtained fluorinated polymer 1F was analyzed by NMR and as a result, the content of the TFE units to the total content of all units of the fluorinated polymer 1F was 65 mol%, and the content of the PAVE units (PMVE units) to the total content of all units of the fluorinated polymer 1F was 35 mol%.

As a result of analysis by NMR, the content of iodine atoms in the fluorinated polymer 1F to the total mass of the fluorinated polymer 1F was 0.05 mass%.

In the same manner as in Ex. 1 except that the fluorinated polymer 1F was used instead of the fluorinated polymer 1B, 3 mm-thick sheet-shaped fluorinated polymer composition 3 was obtained.

In the same manner as in Ex. 1 except that the sheet-shaped fluorinated polymer composition 3 was used instead of the sheet-shaped fluorinated polymer composition 1, crosslinked rubber article 3 containing a crosslinked product of the fluorinated polymer 1F in a flat plate shape of 150 mm × 80 mm × 2 mm in thickness was obtained.

### [Ex. 4]

A stainless steel pressure resistant reactor having an internal capacity of 2.1 L, equipped with an anchor impeller, was deaerated, ultrapure water (980 g), a 30 mass% C₂F₅OCF₂CF₂OCF₂COONH₄ (emulsifier A) solution (201.7 g) as the emulsifier, and a 5 mass% aqueous disodium hydrogen phosphate dodecahydrate solution (2.3 g) were charged, and gas phase was replaced with nitrogen. While stirring by an anchor impeller at 600 rpm, PMVE (72 g) and TFE (14 g) were injected into the reactor and the internal temperature was increased to 80°C. Then, an aqueous APS solution (0.5 mass%, 16 mL) was added to initiate polymerization. Since the pressure in the reactor decreased as the polymerization started, TFE and PMVE were added to keep a constant pressure of 1.2 MPa [gauge]. When the amount of TFE injected reached 6 g, perfluoro-1,4-diiodobutane (2.0 g) was injected. When the amount of TFE injected reached 256 g and the amount of PMVE injected reached 217 g, the reactor was cooled to terminate the polymerization. The polymerization time was 185 minutes.

Gas remaining in the reactor after completion of the polymerization was recovered, and liquid was withdrawn from the reactor. This liquid was taken as aqueous dispersion 4. The aqueous dispersion 4 was a dispersion that had particles (average particle size: 90 nm) containing fluorinated polymer 4 dispersed in the aqueous medium, and had a solid concentration of 30.0 mass%. An aqueous aluminum sulfate solution was added for agglomeration. The recovered agglomerate was dried to obtain rubber-like fluorinated polymer 4.

The obtained fluorinated polymer 4 was analyzed by NMR and as a result, the content of the TFE units to the total content of all units of the fluorinated polymer 4 was 65 mol%, and the content of the PAVE units (PMVE units) to the total content of all units of the fluorinated polymer 4 was 35 mol%.

As a result of analysis by NMR, the content of iodine atoms in the fluorinated polymer 4 to the total mass of the fluorinated polymer 4 was 0.05 mass%.

In the same manner as in Ex. 1 except that the fluorinated polymer 4 was used instead of the fluorinated polymer 1B, 3 mm-thick sheet-shaped fluorinated polymer composition 4 was obtained.

In the same manner as in Ex. 1 except that the sheet-shaped fluorinated polymer composition 4 was used instead of the sheet-shaped fluorinated polymer composition 1, crosslinked rubber article 4 containing a crosslinked product of the fluorinated polymer 4 in a flat plate shape of 150 mm × 80 mm × 2 mm in thickness was obtained.

### [Ex. 5]

A stainless steel pressure resistant reactor having an internal capacity of 2.1 L, equipped with an anchor impeller, was deaerated, ultrapure water (980 g), a 30 mass% C₂F₅OCF₂CF₂OCF₂COONH₄ (emulsifier A) solution (201.7 g) as the emulsifier, and a 5 mass% aqueous disodium hydrogen phosphate dodecahydrate solution (2.3 g) were charged, and gas phase was replaced with nitrogen. While stirring by an anchor impeller at 600 rpm, PMVE (72 g) and TFE (14 g) were injected into the reactor and the internal temperature was increased to 80°C. Then, an aqueous APS solution (0.5 mass%, 16 mL) was added to initiate polymerization. Since the pressure in the reactor decreased as the polymerization started, TFE and PMVE were added to keep a constant pressure of 0.88 MPa [gauge]. When the amount of TFE injected reached 6 g, perfluoro-1,4-diiodobutane (1.6 g) was injected. When the amount of TFE injected reached 256 g and the amount of PMVE injected reached 217 g, the reactor was cooled to terminate the polymerization. The polymerization time was 250 minutes.

Gas remaining in the reactor after completion of the polymerization was recovered, and liquid was withdrawn from the reactor. This liquid was taken as aqueous dispersion 5. The aqueous dispersion 5 was a dispersion that had particles (average particle size: 105 nm) containing fluorinated polymer 5 dispersed in the aqueous medium, and had a solid concentration of 28.5 mass%. An aqueous aluminum sulfate solution was added for agglomeration. The recovered agglomerate was dried to obtain rubber-like fluorinated polymer 5.

The obtained fluorinated polymer 5 was analyzed by NMR and as a result, the content of the TFE units to the total content of all units of the fluorinated polymer 5 was 65 mol%, and the content of the PAVE units (PMVE units) to the total content of all units of the fluorinated polymer 5 was 35 mol%.

As a result of analysis by NMR, the content of iodine atoms in the fluorinated polymer 5 to the total mass of the fluorinated polymer 5 was 0.03 mass%.

In the same manner as in Ex. 1 except that the fluorinated polymer 5 was used instead of the fluorinated polymer 1B, 3 mm-thick sheet-shaped fluorinated polymer composition 5 was obtained.

In the same manner as in Ex. 1 except that the sheet-shaped fluorinated polymer composition 5 was used instead of the sheet-shaped fluorinated polymer composition 1, crosslinked rubber article 5 containing a crosslinked product of the fluorinated polymer 5 in a flat plate shape of 150 mm × 80 mm × 2 mm in thickness was obtained.

### [Ex. 6]

A stainless steel pressure resistant reactor having an internal capacity of 2.1 L, equipped with an anchor impeller, was deaerated, ultrapure water (980 g), a 30 mass% C₂F₅OCF₂CF₂OCF₂COONH₄ (emulsifier A) solution (201.7 g) as the emulsifier, and a 5 mass% aqueous disodium hydrogen phosphate dodecahydrate solution (2.3 g) were charged, and gas phase was replaced with nitrogen. While stirring by an anchor impeller at 600 rpm, PMVE (72 g) and TFE (14 g) were injected into the reactor and the internal temperature was increased to 80°C. Then, an aqueous APS solution (0.5 mass%, 16 mL) was added to initiate polymerization. Since the pressure in the reactor decreased as the polymerization started, TFE and PMVE were added to keep a constant pressure of 0.88 MPa [gauge]. When the amount of TFE injected reached 6 g, perfluoro-1,4-diiodobutane (3.0 g) was injected. When the amount of TFE injected reached 256 g and the amount of PMVE injected reached 217 g, the reactor was cooled to terminate the polymerization. The polymerization time was 500 minutes.

Gas remaining in the reactor after completion of the polymerization was recovered, and liquid was withdrawn from the reactor. This liquid was taken as aqueous dispersion 6. The aqueous dispersion 6 was a dispersion that had particles (average particle size: 105 nm) containing fluorinated polymer 6a dispersed in the aqueous medium, and had a solid concentration of 28.5 mass%. An aqueous aluminum sulfate solution was added for agglomeration. The recovered agglomerate was dried to obtain rubber-like fluorinated polymer 6.

The obtained fluorinated polymer 6 was analyzed by NMR and as a result, the content of the TFE units to the total content of all units of the fluorinated polymer 6 was 65 mol%, and the content of the PAVE units (PMVE units) to the total content of all units of the fluorinated polymer 6 was 35 mol%.

As a result of analysis by NMR, the content of iodine atoms in the fluorinated polymer 6 to the total mass of the fluorinated polymer 6 was 0.07 mass%.

In the same manner as in Ex. 1 except that the fluorinated polymer 6 was used instead of the fluorinated polymer 1B, 3 mm-thick sheet-shaped fluorinated polymer composition 6 was obtained.

In the same manner as in Ex. 1 except that the sheet-shaped fluorinated polymer composition 6 was used instead of the sheet-shaped fluorinated polymer composition 1, crosslinked rubber article 6 containing a crosslinked product of the fluorinated polymer 6 in a flat plate shape of 150 mm × 80 mm × 2 mm in thickness was obtained.

### [Measurement methods and evaluation methods]

Various measurement methods and evaluation methos are as follows.

### [Average particle size]

The average particle size of particles in the aqueous dispersion was measured by using the aqueous dispersion in each Ex. as a sample, by means of a dynamic light scattering particle size measuring apparatus (ELSZ manufactured by Otsuka Electronics Co., Ltd.).

### [Iodine content measuring method]

The solid composition comprising the fluorinated polymer was hot-pressed into a 300 µm sheet. The obtained sheet-shaped composition was subjected to fluorescent X-ray analysis by ZSX PrimusII (manufactured by Rigaku Corporation) to calculate the iodine content in the solid composition (fluorinated polymer) by fundamental parameter method.

### [2% weight loss temperature and 5% weight loss temperature]

10 mg of the fluorinated polymer obtained in each Ex. was weighed as a sample and put in an aluminum pan. While the sample was heated in an air atmosphere at a heating rate of 10°C/min from 30°C to 550°C, the mass change of the sample was measured. The temperature at which the mass of the sample became 98 mass% based on the mass of the sample before heating being 100 mass%, was taken as the 2% mass loss temperature. Likewise, the temperature at which the mass of the sample became 95 mass% was taken as the 5% mass loss temperature.

The above thermogravimetric analysis was conducted by using a differential thermogravimetric measuring apparatus "NEXTA STA series STA200" (manufactured by Hitachi High-Tech Corporation).

### [Optimum vulcanization time Te]

The 3 mm-thick sheet-shaped fluorinated copolymer composition obtained in each Ex. was cut into 10 g to obtain a cut piece. The cut piece was sandwiched from both sides of its main surface between two polyester films (ALFA Technologies, PART#F0311-S, 130 mm × 130 mm × 24 µm) to obtain a measurement sample. The measurement sample was placed on a die.

The torque (dNm) was measured by a method in accordance with JIS K6296-1 under conditions of measurement apparatus: PREMER RPA (manufactured by ALFA Technologies), die chape: D0380, 150°C (test temperature), 20 minutes (vulcanization time), 100 cpm, angle: 3.00 deg., to prepare a torque-vulcanization time curve.

From the prepared torque-vulcanization time curve, where the minimum torque value is defined as 0% and the maximum torque value is defined as 100%, the vulcanization time at which the torque reaches 5%, that is t_{C}(5), and the vulcanization time at which the torque reaches 35%, that is t_{C}(35), were obtained.

### [Storage elastic modulus]

As a measurement apparatus, an apparatus "PREMER RPA (manufactured by ALPHA TECHNOLOGIES, die shape: D0380)" was used.

The fluorinated polymer obtained in each Ex. was kneaded by a two-roll mill at room temperature for 10 minutes to prepare a 3 mm-thick sheet. The sheet thickness was controlled by adjusting the gap of the two rolls.

The obtained sheet was cut so that the weight would be about 10 g to obtain a cut sheet. The cut sheet was sandwiched between two polyester films (ALFA Technologies PART#F0311-S, 130 mm × 130 mm × 24 µm) to obtain a measurement sample. The sample was placed on a die of the measurement apparatus. The die temperature was preliminarily set to 100°C.

The sample was held at 100°C at a frequency of 30 cpm at an amplitude angle of 0.2 deg for 2 minutes, and then the amplitude angle was set to 0.5 deg and the frequency was increased to 10 cpm, 20 cpm, and 50 cpm to measure the storage elastic modulus. The storage elastic modulus at a frequency of 50 cpm at 100°C was taken as the storage elastic modulus G' (unit: kPa) of the sample.

### [Mold release property]

The fluorinated polymer composition obtained in each Ex. was introduced to a sheet-shaped mold and subjected to a pressure treatment at 150°C for 20 minutes to obtain a crosslinked rubber article (100 mm × 60 mm × 1 mm in thickness) attached to the mold.

Immediately after the pressure treatment, air was blown to the interface between the crosslinked rubber article and the mold by an air gun (product name: Cyclone Duster, manufactured by CHUO KUKI CO., LTD.), and the mold release property was evaluated based on the following evaluation standards.

### <Conditions of air blow by air gun>

Pressure: 0.5 MPa
Air blow time: 3 seconds

One discharge was defined as a single air blow under the above conditions.

### <Evaluation standard>

⊚: crosslinked rubber article released from mold by one blow.
○: crosslinked rubber article released from mold by two blows.
△: crosslinked rubber article released from mold by three to five blows.
×: crosslinked rubber article not released from mold by five blows.

### [Hardness]

Using a test sample of the crosslinked rubber article in a flat plate shape obtained in each Ex., the hardness (Shore-A) was measured in accordance with JIS K6253-3:2012 using a type A durometer.

As the measurement apparatus, an automatic hardness tester for rubber (digi test shore A, manufactured by H. Bareiss) was used.

The test was conducted using three test samples, and an arithmetic mean of the measured values of the thee test samples was recorded.

The measurement results and the evaluation results are shown in the following Table 7.

**Table 7**

| | | Ex. 1 | Ex. 2 | Ex. 3 | Ex. 4 | Ex. 5 | Ex. 6 |
|---|---|---|---|---|---|---|---|
| Storage elastic modulus G' (kPa) | | 417 | 615 | 247 | 420 | 608 | 265 |
| 2% weight loss temperature (°C) | | 413 | 415 | 409 | 425 | 428 | 417 |
| 5% weight loss temperature (°C) | | 439 | 438 | 434 | 428 | 433 | 420 |
| Δ Td (°C) | | 26 | 23 | 25 | 3 | 5 | 3 |
| Vulcanization properties | tc(5) (min) | 0.9 | 0.9 | 0.9 | 0.3 | 0.2 | 0.3 |
| | tc(35) (min) | 1.3 | 1.2 | 1.4 | 0.4 | 0.4 | 0.4 |
| | tc(35)-tc(5) (min) | 0.4 | 0.3 | 0.5 | 0.1 | 0.2 | 0.1 |
| | Te (min) | 4.9 | 3.9 | 5.9 | 1.3 | 2.2 | 1.3 |
| Shore hardness | | 73 | 76 | 72 | 71 | 71 | 71 |
| Mold release property | | ⊚ | ⊚ | ○ | △ | △ | × |
| Content of emulsifier A (ppb) | | 0 | 0 | 0 | >150 | >150 | >150 |
| Content of formula (S1) (ppb) | | 8 | 12 | 20 | 30 | 24 | 20 |
| Content of formula (S2) (ppb) | | 0 | 0 | 0 | 0 | 0 | 0 |
| Content of formula (S3) (ppb) | | 0 | 0 | 0 | 0 | 0 | 0 |
| Content of formula (S4) (ppb) | | 0 | 0 | 0 | 0 | 0 | 0 |

As evident from Table 7, it was confirmed that the crosslinked rubber article obtained by using the fluorinated polymer composition of which the optimum vulcanization time Te is 2.3 minutes or more, was excellent in the mold release property (Ex. 1 to 3).

Whereas the crosslinked rubber article obtained by using the fluorinated polymer composition of which the optimum vulcanization time is less than 2.3 minutes, was inferior in the mold release property (Ex. 4 to 6).

The entire disclosure of Japanese Patent Application No. 2023-222377 filed on December 28, 2023 including specification, claims and summary is incorporated herein by reference in its entirety.

## Claims

1. A fluorinated polymer composition comprising a fluorinated polymer and a crosslinking agent,
wherein the optimum vulcanization time Te obtained in accordance with the formula A is 2.3 minutes or more: $Te = {t}_{C} \left(5\right) + 10 \times \left({t}_{C}\left(35\right)-{t}_{C}\left(5\right)\right)$ formula A
in the formula A, t_{C}(5) is the vulcanization time at which the torque reaches 5%, and t_{C}(35) is the vulcanization time at which the torque reaches 35%, in a torque-vulcanization time curve determined in accordance with JIS K6296-1 using the fluorinated polymer composition at a test temperature of 150°C, where the minimum torque value is defined as 0% and the maximum torque value is defined as 100%.

2. The fluorinated polymer composition according to Claim 1, wherein the optimum vulcanization time Te is 60 minutes or less.

3. The fluorinated polymer composition according to Claim 1, wherein the fluorinated polymer has units based on tetrafluoroethylene and units based on a perfluoro(alkyl vinyl ether).

4. The fluorinated polymer composition according to Claim 1, wherein the crosslinking agent is at least one member selected from the group consisting of an organic peroxide and a compound having two or more amino groups.

5. The fluorinated polymer composition according to Claim 1, which further contains a crosslinking aid.

6. The fluorinated polymer composition according to Claim 5, wherein the crosslinking aid is at least one member selected from the group consisting of a compound represented by the following formula (7), triallyl cyanurate, triallyl isocyanurate, trimethallyl isocyanurate, 1,3,5-triacryloyl hexahydro-1,3,5-triazine, triallyl trimellitate, m-phenylenediamine bismaleimide, p-quinone dioxime, p,p'-dibenzoylquinone dioxime, dipropargyl terephthalate, diallyl phthalate, N,N',N",N‴-tetraallyl terephthalamide, and a vinyl group-containing siloxane oligomer:
(CR4^{1R}4²⁼CR4³⁾2_{R}4⁴ formula (7)
in the formula (7), R⁴¹, R⁴² and R⁴³ are each independently a hydrogen atom, a fluorine atom, a C₁₋₅ alkyl group or a C₁₋₅ fluoroalkyl group, R⁴⁴ is a C₁₋₁₈ bivalent fluorohydrocarbon group or a group having an etheric oxygen atom at a terminal end or between a carbon-carbon bond of the fluorohydrocarbon group, and the two R⁴¹, the two R⁴² and the two R⁴³ may be respectively the same or different from each other.

7. The fluorinated polymer composition according to Claim 1, which further contains a filler.

8. The fluorinated polymer composition according to Claim 7, wherein the filler is at least one member selected from the group consisting of carbon black, barium sulfate, calcium metasilicate, calcium carbonate, titanium oxide, silicon dioxide, clay and talc.

9. The fluorinated polymer composition according to Claim 1, wherein the storage elastic modulus G' of the fluorinated polymer at 100°C at a frequency of 50 cpm is 200 kPa or more.

10. A method for producing a fluorinated polymer composition, which comprises
step 1 of polymerizing monomers containing tetrafluoroethylene and a perfluoro(alkyl vinyl ether), in an aqueous dispersion that contains substantially no water-soluble emulsifier, that contains a first fluorinated polymer containing units based on tetrafluoroethylene and units based on a perfluoro(alkyl vinyl ether), and that contains an aqueous medium, to produce a second fluorinated polymer containing units based on the tetrafluoroethylene and units based on the perfluoro(alkyl vinyl ether); and
step 2 of adding a crosslinking agent to the second fluorinated polymer to obtain a fluorinated polymer composition containing the second fluorinated polymer and the crosslinking agent,
wherein in the first fluorinated polymer, the content of the units based on the perfluoro(alkyl vinyl ether) is 20 to 95 mol% to the total content of the units based on the tetrafluoroethylene and the units based on the perfluoro(alkyl vinyl ether),
in the second fluorinated polymer, the content of the units based on the perfluoro(alkyl vinyl ether) is 20 to 95 mol% to the total content of the units based on the tetrafluoroethylene and the units based on the perfluoro(alkyl vinyl ether); and
before the start of the polymerization of the monomers, the content of the first fluorinated polymer is 0.01 to 4.0 mass% to the total mass of the aqueous dispersion.

11. A crosslinked rubber article, which is obtained by crosslinking the fluorinated polymer contained in the fluorinated polymer composition as defined in any one of Claims 1 to 9.
